# EUROPEAN PATENT SPECIFICATION

(11) **EP 4 244 722 B1**
(45) Date of publication and mention of the grant of the patent: **26.08.2026**
(21) Application number: 21820394.1
(22) Date of filing: 10.11.2021
(51) Int. Cl.: G06F 11/1446

(54) **EFFICIENT BACKUP AFTER A RESTORE OPERATION**
EFFIZIENTE SICHERUNG NACH EINER WIEDERHERSTELLUNGSOPERATION
SAUVEGARDE EFFICACE APRÈS UNE OPÉRATION DE RESTAURATION

(30) Priority: 13.11.2020 US 202017097964
(43) Date of publication of application: 20.09.2023
(73) Proprietor: Cohesity, Inc., Santa Clara, California 95054 (US)
(72) Inventor: MUNDRA, Shreshtha, San Jose, CA 95110 (US); ARUN, Anand, San Jose, CA 95110 (US); SAWANT, Shubham, Parashram, San Jose, CA 95110 (US); HWANG, Yinzen, San Jose, CA 95110 (US)
(74) Representative: EIP
(86) International application number: PCT/US2021/058805
(87) International publication number: WO 2022/103855

(56) References cited:
- EP-A1- 3 451 173
- US-A1- 2011 184 912
- US-A1- 2013 080 695
- US-A1- 2017 060 699
- US-A1- 2019 065 322
- US-B1- 10 402 283

## Description

### BACKGROUND OF THE INVENTION

A primary system may perform a snapshot of its file system data and store a backup corresponding to the snapshot at a secondary storage system. The file system data may include data associated with one or more objects and metadata associated with the one or more objects stored at the primary system. The object may correspond to a file, a database, a virtual machine (VM), an application, a volume, etc. At some point in time, the primary system may need to be restored to a particular point in time. The secondary storage system may receive a request to restore to the primary system an object corresponding to the particular point in time. In response to the request, the secondary storage system may restore the object to the primary system. The primary system may therefore be referred to as a 'restore target' or a 'recipient system' because it is the system to which the restoration is being performed, while the secondary storage system may be referred to as a 'backup system' because backups of file system data are stored at the secondary storage system.

EP 3451173 A1 describes restoring a database using a fully hydrated backup. US 2019/065322 A1 describes restoring a database using a fully hydrated backup. US 2017/060699 A1 describes methods and systems for restoring data containers in a storage system. US 2013/080695 A1 describes restores in a cascaded copy environment.

### SUMMARY

According to a first aspect, there is provided a computer-implemented method as defined in appended claim 1. According to a second aspect, there is provided a computer program product as defined in appended claim 13. According to a third aspect, there is provided a secondary storage system as defined in appended claim 14.

### BRIEF DESCRIPTION OF THE DRAWINGS

Various embodiments of the invention are disclosed in the following detailed description and the accompanying drawings.
FIG. 1 is a block diagram illustrating an embodiment of a system for performing an efficient backup after a restore operation in accordance with some embodiments.
FIG. 2A is a block diagram illustrating an embodiment of a tree data structure.
FIG. 2B is a block diagram illustrating an embodiment of a cloned snapshot tree.
FIG. 2C is a block diagram illustrating an embodiment of modifying a cloned snapshot tree.
FIG. 2D is a block diagram illustrating an embodiment of a modified snapshot tree.
FIG. 3A is a block diagram illustrating an embodiment of a tree data structure.
FIG. 3B is a block diagram illustrating an embodiment of a cloned object metadata structure.
FIG. 3C is a block diagram illustrating an embodiment of modifying a cloned metadata structure.
FIG. 3D is a block diagram illustrating an embodiment of a modified object metadata structure.
FIG. 4A is a diagram illustrating a tree data structure in accordance with some embodiments.
FIG. 4B is a diagram illustrating a tree data structure in accordance with some embodiments.
FIG. 4C is a diagram illustrating a tree data structure in accordance with some embodiments.
FIG. 5 is a flow diagram illustrating an embodiment of a process for performing an efficient backup after a restore operation in accordance with some embodiments.
FIG. 6 is a flow diagram illustrating an embodiment of a process for performing an efficient backup after a restore operation in accordance with some embodiments.

### DETAILED DESCRIPTION

A technique to perform an efficient backup after a restore operation is disclosed herein. Efficiency in backups is achieved by reducing the resources, data transfer, and time required to perform the backup. Avoiding unnecessary data transfer is important wherever possible. Many changes may be made to the primary system in between each backup. If backups are inefficient, large amounts of data is transferred between the primary system and secondary storage system, which leads to delays in achieving a complete backup, excessive use of the limited resources available at each system, and lengthy periods in which the primary system is unusable, as access to the data at the primary system may be prevented when performing a backup. Efficiency may also be achieved by limiting practices that place onerous requirements on primary systems during the backup, to reduce using computing resources that may be used for other purposes. Similarly, efficiency can also be achieved by limiting practices that use too many computing resources at the secondary storage system.

In general, a primary system may be configured to perform a snapshot, also referred to as a 'backup snapshot', of its file system data. In some examples, the primary system may perform a backup snapshot according to a backup policy. The primary system may perform a backup snapshot periodically (e.g., hourly, daily, weekly, monthly, etc.), after a threshold amount of data has changed, in response to a user command, or for another reason.

A backup snapshot is performed and file system data is provided from the primary system to a secondary storage system. The secondary storage system creates a backup based on the backup snapshot, including the file system data along with a data structure, such as a tree data structure, which is generated at the secondary storage system to organize the file system data. A tree data structure may be referred to as a 'snapshot tree' or a 'snaptree'. The backup may be referred to as a backup instance or a backup version when stored at the secondary storage system and may be considered to include a tree data structure along with the file system data provided by the primary system.

A backup snapshot performed by a primary system may be either a full backup snapshot or an incremental backup snapshot. After a full backup snapshot, the primary system may provide to the secondary storage system all file system data associated with all or part of the primary system. For example, the full backup snapshot may include all of the file system data associated with an object of a plurality of objects (e.g., a VM) hosted on the primary system. In another example, the full backup snapshot may include all of the file system data associated with some or even all of the plurality of objects (e.g., a VM and a database) hosted on the primary system. After an incremental backup snapshot, the primary system may provide file system data associated with the primary system that has not been backed up since a previous backup snapshot. The file system data in an incremental backup snapshot may be all of the file system data associated with the primary system that has not been backed up since a previous backup snapshot or file system data associated with one or more objects hosted by or stored at the primary system that has not been backed up since a previous backup snapshot.

After a backup snapshot is performed by the primary system, the secondary storage system receives the file system data from the primary system and creates a corresponding backup. A backup may therefore be referred to as a full backup, when corresponding to a full backup snapshot, or an incremental backup, when corresponding to an incremental backup snapshot. As part of the backup, the file system data is stored at secondary storage system. The secondary storage system generates a corresponding view of file system data. The corresponding view of file system data represents a state of the primary system for a particular point in time at which the backup snapshot was performed by the primary system. In some embodiments, the corresponding view of file system data represents a state of the entire primary system. In some embodiments, the corresponding view of file system data represents a state of an object hosted on the primary system. In some embodiments, the corresponding view of file system data represents corresponding states of some objects hosted on the primary system.

The view of file system data generated by the secondary storage system includes metadata that enables the file system data received from the primary system and associated with the backed up object(s) to be located. The metadata may include one or more data structures, such as tree data structures, that organize the data chunks associated with the backed up object(s).

An example of a tree data structure is a snapshot tree, as described herein, which may be based on a B+ tree structure (or other type of tree structure in other embodiments). Although snapshot trees are referred to in the following description, it will be appreciated that the techniques and methods described may be applied to other tree data structures and to other data structures. Arranging data using a tree data structure may allow different views of file system data to be captured. A first view may be associated with a first backup and may correspond to a first backup snapshot performed by the primary system, a second view may be associated with a second backup and may correspond to a second backup snapshot performed by the primary system, ..., and an nth view may be associated with an nth backup and may correspond to an nth backup snapshot performed by the primary system. A chain of snapshot trees may be linked together by allowing a node of a later version of a snapshot tree to reference a node of a previous version of a snapshot tree. The previous version of the snapshot tree may correspond to an earlier backup snapshot performed by the primary system. For example, a root node or an intermediate node of a snapshot tree corresponding to a second backup snapshot may reference an intermediate node or leaf node of a snapshot tree corresponding to a first backup snapshot.

In essence, a backup snapshot involves file system data associated with an object or objects of the primary system being provided to the secondary storage system. The file system data may be stored at the primary system as one or more data blocks. For each backup snapshot, the secondary storage system creates a backup, comprising data chunks associated with the object and metadata that organizes the data chunks associated with the object in the form of a snapshot tree. The data chunks may be based on the data associated with the object or objects at the primary system, i.e. the data blocks stored at the primary system. The snapshot tree corresponds to a view of the data and represent a state of the object or objects at a particular point in time. Each snapshot tree may have an associated view identifier, which identifies the view with which the snapshot tree is associated and allows organization of snapshot trees by using a view table that stores view identifiers and associated metadata. A view identifier associated with a snapshot tree of a most recent backup may be set as a current view identifier, for use during subsequent backups.

At some point in time, the primary system or one or more objects of the primary system may become corrupted, infected with malware, or otherwise inaccessible or unusable. This may cause the primary system to go offline or to malfunction. For ease of explanation, corruption is referred to below, but the explanation applies to all forms of inaccessibility of a primary system. When the corruption occurs, the primary system may need to be restored to return to an uncorrupted state. This is achieved by restoring to a particular point in time prior to the corruption, which is a point of time at which the primary system was known to be functioning correctly. A user of the primary system may select the particular point in time to which the primary system is to be restored. The particular point in time may be a point in time that is before a most-recent backup, because the corruption was known to have occurred after this point in time and/or before to the most-recent backup.

The secondary storage system may receive a request to restore, to the primary system, file system data associated with a specific backup that represents the state of the primary system at the particular point in time. In some embodiments, the request is to restore the entire primary system to a particular point in time for which there is an associated backup. In some embodiments, the request is to restore an object to the particular point in time for which there is an associated backup. For example, the request may be to restore a particular version of a VM to the primary system.

Efficient backups after a restore are achieved by creating, at the secondary storage system, a new snapshot tree that is based on the snapshot tree corresponding to the specific backup from which the primary system was restored. This new snapshot tree provides a reference point from which the next backup may be performed, and so will be referred to hereafter as a reference snapshot tree. The reference snapshot tree represents the state of the primary system at the time of the restore, and so may subsequently be used to perform a new, incremental backup relative to the state of the primary system at this time. This eliminates the need to create full backups or incremental backups relative to backups from before the restore. The amount of data transferred is reduced and because the resources and time used by the primary and secondary storage systems are reduced, meaning normal operation of the primary system is resumed more quickly. Furthermore, the way in which the reference snapshot tree is created is also efficient (as will be described in more detail below). The processing required at each of the primary and secondary systems is reduced. This solution also avoids disruption at the primary system and does not require the operation of the primary system to be changed.

The above-disclosed techniques contrast to systems in which the backup performed after part or all of the primary system has been restored based on a previous backup that is from an earlier point in time than the most recent backup. For example, some systems perform a full backup after the object has been restored. This is an inefficient use of time and resources because the secondary storage system already stores most of the file system data that is to be included in the full backup. In order to create a full backup, additional network bandwidth between the primary system and the secondary storage system as well as additional resources (e.g., CPU resources) of the systems will be consumed to transmit data that is already stored by the secondary storage system. In other examples, an incremental backup is performed. However, incremental backups back up file system data that has changed since a most recent backup, whereas the primary system was restored to a state from before the most recent backup. Therefore, differences between the most recent backup and the backup from which the primary system was restored as well as differences since the restoration are included in these incremental backups. This is an inefficient use of time and resources because it causes an unnecessarily large amount of data to be included in the incremental backup by effectively duplicating data that has already been backed up.

To expand on the above, when a request is received to restore the primary system to a specific backup, the secondary storage system creates, at a storage associated with the secondary storage system, a reference snapshot tree. This may also be referred to as a new reference backup, a reference backup, a new reference backup instance, or a reference backup instance. The reference snapshot tree represents a state of the system at the particular point in time that the restore was made. This point in time is therefore after the point in time associated with the most-recent backup and before a point in time associated with a next backup.

The reference snapshot tree is created by the secondary storage system based on the specific backup. The reference snapshot tree differs from the specific backup because it is not created in response to a backup snapshot being performed by the primary system or a backup being created at the secondary storage system, but is instead created in response to a restore request. Therefore, when the reference snapshot tree is created, no corresponding file system data is received by the secondary storage system. Instead, the reference snapshot tree is created based on the snapshot tree associated with the specific backup. This creates a new view of the tree data structure, separately from a backup being performed.

The reference snapshot tree is created as a copy of the snapshot tree associated with the specific backup. The copy of the snapshot tree may be created by cloning a root node of a snapshot tree associated with the specific backup. Cloning the root node of the snapshot tree associated with the specific backup may add an additional view to the chain of snapshot trees included in the tree data structure.

Also in response to the request, the file system data associated with the specific backup is provided to the primary system. In some embodiments, the data associated with the view corresponding to the specific backup is provided to the primary system. In some embodiments, the data associated with the cloned view corresponding to the specific backup is provided to the primary system. Each of these options provides the requested file system data, because the specific backup and its clone share the same data.

In response to receiving the file system data associated with the specific backup, the primary system may store in one or more storage volumes of the primary system the data associated with the specific backup to restore the primary system to the particular point in time. In some embodiments, a differential restore is performed. A differential restore may include modifying and overwriting the disks, such as the disks of a VM, using the data associated with the specific backup. For example, the primary system may already store some of the specific backup data for the particular point in time. The differential restore may include data not stored by the primary system that is required to modify the primary system into a state that corresponds to the particular point in time. The secondary storage system may provide the primary system the data not stored by the primary system that is required to modify the primary system into a state that corresponds to the particular point in time. In some embodiments, a non-differential restore is performed. A non-differential restore may include creating a new VM using the data associated with the specific backup. The non-differential restore may include all of the data associated with the specific backup that corresponds to the particular point in time. The secondary storage system may provide the primary system all of the data that is required to restore the primary system to a state that corresponds to the particular point in time.

Having created the reference snapshot tree and restored the primary system based on the specific backup, the state of the primary system matches the reference snapshot tree. The reference snapshot tree may be set as a 'current view' of the primary system. To do this, a view identifier associated with the root node of the reference snapshot tree may be associated with a label in a view table that indicates that it is the current view. This may allow the next backup snapshot to be performed relative to the reference snapshot tree, rather than the most recent backup. Setting the reference snapshot tree as the current view replaces the earlier view and view identifier, corresponding to the most recent backup, as current view.

In some embodiments, in response to receiving the data associated with the specific backup, the primary system is configured to modify object metadata associated with the specific backup. For example, a virtual machine name may be modified, attributes associated with one or more objects may be customized, one or more tags may be applied to a virtual machine, permissions, etc.

The file system data associated with the specific backup is in a locked state on the primary system (e.g., locked from users associated with the primary system, thereby preventing changes from being made to the data) while it is being restored to the primary system. The primary system may include a change tracker. A change tracker may be configured to track the changes (e.g., changed data blocks) that have occurred since a checkpoint, which may correspond to the most recent backup. The checkpoint may comprise a tracking identifier (ID). The change tracker may create and assign a tracking ID to each change. Alternatively, the change tracker may create and assign a tracking ID at points corresponding to backups, and track changes relative to the tracking ID using one or more timestamps. The most recent backup is associated with a specific tracking ID. A backup agent may be configured to use the specific tracking ID associated with the most recent backup to determine which data to include in an incremental backup.

The secondary storage system may send to the primary system a command to create a new tracking ID (e.g., a new checkpoint). The command may be sent in response to receiving the request to restore the specific backup to the primary system or in response to completing the restoration. In response to the command, the change tracker may create the new tracking ID and send the new tracking ID to the secondary storage system. The new tracking ID indicates a checkpoint from which a subsequent incremental backup is to be performed. The new tracking ID may therefore be considered to correspond to the particular point in time at which the restore was made, while the reference snapshot tree represents the state of the object or primary system at that particular point in time. The secondary storage system may store the new tracking ID and may associate the new tracking ID with the reference snapshot tree. The secondary storage system may associate the new tracking ID with a view identifier of the reference snapshot tree.

After the change tracker creates the new tracking ID and/or after the reference snapshot tree is generated, the primary system may set the file system data associated with the specific backup to a mutable, i.e. an unlocked, state, in which changes to the file system data are permitted. The new tracking ID can be used to create a subsequent incremental backup that captures changes made since the primary system was restored and excludes other changes, such as changes made after the last backup and before the primary system was restored. For example, when it is determined that the next incremental backup is to be performed, the secondary storage system may send this tracking ID to the primary system, which returns data blocks to the secondary storage system that have changed with respect to the tracking ID.

The primary system may perform a backup snapshot after the data associated with the specific backup is restored. In some embodiments, the primary system may perform the backup snapshot according to a schedule (e.g., everyday at 12 am). The primary system may be configured to perform the backup snapshot based on the new tracking ID that corresponds to the reference snapshot tree. If tracking IDs are used as checkpoints only, the new tracking ID may be a last created tracking ID. In some embodiments, the secondary storage system sends to the primary system a request to perform the backup snapshot based on the new tracking ID.

After the restore operation, the secondary storage system may receive from the primary system the file system data for the next incremental backup. This file system data comprises data blocks that have changed since the reference snapshot tree. Put another way, these blocks are blocks to which changes were made between the current moment and the point in time associated with the reference snapshot tree. This is in contrast to systems where these blocks would be data blocks that had changed since the earlier backup, representing the point in time from before the restore, and so would include differences between the two points of time represented by the specific backup from which the primary system was restored and the most recent backup, as well as changes since the restore operation.

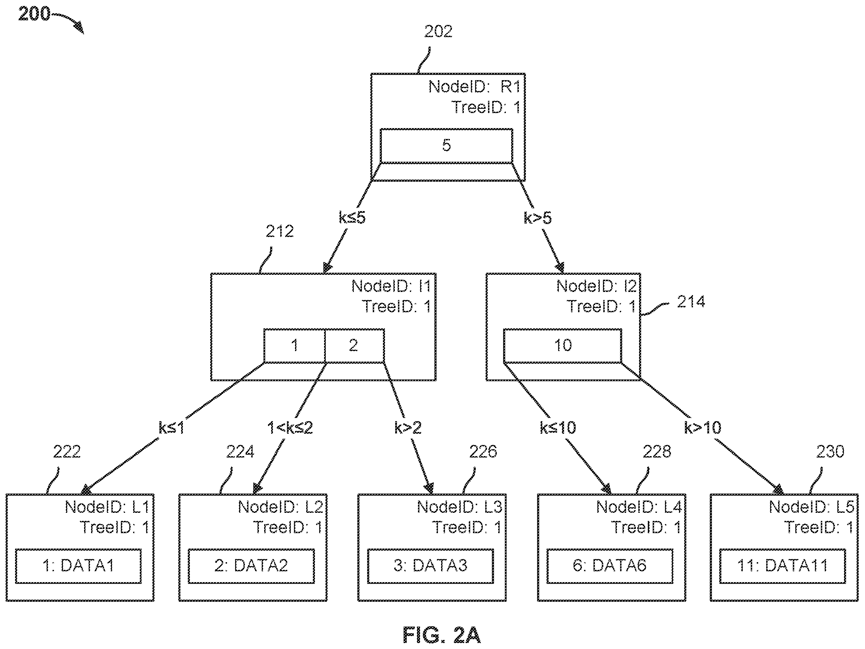

To generate a view of file system data that represents a state of the primary system for a particular point in time at which the next incremental backup (which may be referred to herein as the 'constructive incremental backup' to distinguish it from incremental backups performed relative to earlier backups) was performed, the secondary storage system may clone a root node of the tree data structure that corresponds to reference snapshot tree and modify the tree data structure in a manner as described below in relation to FIGs. 2A to 3D to reflect the state of the primary system for the particular point in time at which the constructive incremental backup was performed.

Using the efficient backup after a restore operation technique disclosed herein, instead of performing an incremental backup in which the secondary storage system is provided with the data that has changed since a previous backup, a constructive incremental backup snapshot may be performed by the primary system, with a corresponding constructive incremental backup being created at the secondary storage system. In such an incremental backup, data is provided to the secondary storage system that has changed since the reference snapshot tree (and optionally the new tracking ID) was created. This is an efficient backup after a restore operation because the amount of data that is backed up to the secondary storage system is limited to the data that has changed since the restore operation. Because this is data that has been changed since the restore operation, it is data that is not currently stored at the secondary storage system. Therefore, the backup contains data not stored at the secondary storage system. Furthermore, a full backup of the primary system does not need to be performed after the restore operation because the secondary storage system already stores most of the data that is to be included in the full backup of the primary system. Thus, the amount of resources needed by the primary system to perform a backup after a restore operation is reduced.

Efficient backup after restoration is achieved by utilizing the ability of a secondary storage system to quickly create new snapshot trees by cloning root nodes of earlier trees. Harnessing the fast and straightforward process of creating a new snapshot tree at the time of restoration ensures that time and resources are not wasted, especially at critical moments such as a first backup after a restore. Such techniques as described above enable the so-called 'constructive incremental backup snapshot' and 'constructive incremental backup' to be achieved. Particularly, a snapshot tree is used to reflect an event that does not correspond to a backup or a backup snapshot, but instead to reflect a different action taken by the secondary storage system and primary system together. Furthermore, tracking identifiers may also be used by registering at the primary system when a restore took place, rather than when a most recent backup took place. These mechanisms significantly reduces the burden at each of the secondary storage system and primary system during backup after a restoration, as well as reducing the impact that a restoration has on a user's ability to interact with the primary system.

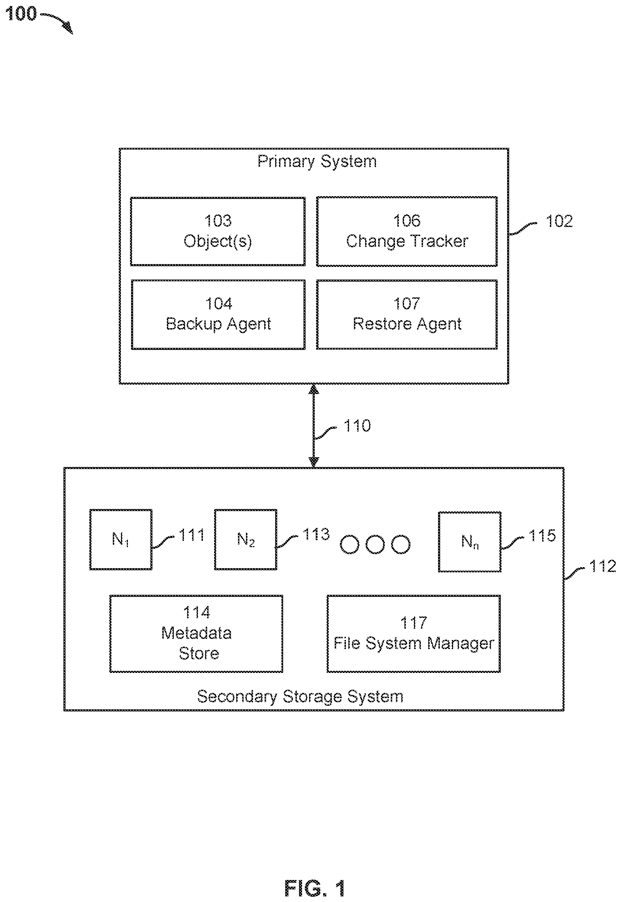

To enable further explanation of the invention, FIG. 1 is a block diagram illustrating an embodiment of a system for performing an efficient backup after a restore operation in accordance with some embodiments. In the example shown, system 100 includes primary system 102 and secondary storage system 112. Primary system 102 is coupled to secondary storage system 112 via connection 110. Connection 110 may be a wired or wireless connection. Connections 110 may communicate data and/or information via a local area network, a wide area network, a storage area network, campus area network, metropolitan area network, system area network, intranet, the Internet, and/or a combination thereof. In some embodiments, each of the nodes 111, 113, 115 includes a corresponding connection to backup agent 104 and/or restore agent 107. In some embodiments, backup agent 104 and restore agent 107 are combined as a single agent.

Primary system 102 is a computing system that stores file system data. The file system data may include data associated with one or more objects (e.g., content files, text files, database file, database, virtual machine, a container, an application, etc.) and metadata associated with the one or more objects (e.g., creation time, owner, modification time, file size, etc.) (also referred to herein as "object metadata"). The file system data is stored in one or more storage volumes (not shown). Primary system 102 may be comprised of one or more servers, one or more computing devices, one or more storage devices, and/or a combination thereof. Primary system 102 may be configured to send a backup snapshot of file system data to secondary storage system 112. The backup snapshot may be sent to the secondary storage system 122 according to one or more backup snapshot policies. In some embodiments, a backup snapshot policy indicates that file system data is to be backed up on a periodic basis (e.g., hourly, daily, weekly, monthly, etc.), when a threshold size of data has changed, in response to a command from a user associated with primary system 102, etc.

Backup agent 104 may be configured to cause primary system 102 to perform a backup snapshot (e.g., a full backup snapshot, incremental backup snapshot, or a constructive incremental backup snapshot). The backup agent 104 may perform the backup snapshot in response to a command from the secondary storage system 112. A full backup snapshot may include all of the file system data of primary system 102 at a particular moment in time. In some embodiments, a full backup snapshot for a particular object of the one or more objects 103 is performed and the full backup snapshot of the particular object includes all of the data (e.g., content data of an object, object metadata) associated with the particular object at a particular moment in time. An incremental backup snapshot may include file system data of primary system 102 that was not included in a previous backup snapshot. In some embodiments, an incremental backup snapshot for a particular object of the one or more objects 103 is performed and the incremental backup snapshot of the particular object includes all of the data associated with the particular object that was not included in a previous backup snapshot. The incremental backup snapshot may be performed based on a tracking ID associated with the previous backup snapshot, e.g., the incremental backup snapshot includes changes to file system data that occurred after the previous backup snapshot.

In some embodiments, backup agent 104 is running on primary system 102. In some embodiments, backup agent 104 is running in one of the one or more objects. In some embodiments, a first backup agent 104 is running on primary system 102 and a separate backup agent 104 is running in one of the one or more objects 103. In some embodiments, an object includes a backup function and is configured to perform a backup snapshot on its own without backup agent 104. In some embodiments, primary system 102 includes a backup function and is configured to perform a backup snapshot on its own without backup agent 104. In some embodiments, secondary storage system 112 may provide instructions to primary system 102, causing primary system 102 to execute backup functions without backup agent 104. In some embodiments, the backup agent 104 may receive the instructions from the secondary storage system 112.

Secondary storage system 112 is comprised of a storage cluster that includes a plurality of nodes 111, 113, 115. Although three nodes are shown, secondary storage system 112 may be comprised of *n* nodes. In some embodiments, a node includes a processor and memory, and is coupled to a separate storage device. The separate storage device may include one or more storage devices (e.g., flash storage devices). A storage device may be segmented into a plurality of partitions. In some embodiments, one of the partitions is configured to store all of the secondary storage system 112 generated metadata (e.g., snapshot trees, object metadata structures) included in metadata store 114. In some embodiments, a partition is configured to store some of the metadata store 114 and the secondary storage system 112 generated metadata included in metadata store 114 is stored in a plurality of partitions. A node may be allocated one of the partitions that stores some of metadata store 114. Each of the nodes 111, 113, 115 may be allocated one or more of the partitions. The one or more partitions allocated to a node may be configured to store data associated with some or all of the plurality of objects that were backed up to secondary storage system 112. For example, the separate storage device may be segmented into 10 partitions and storage device 112 may include 10 nodes. A node of the 10 nodes may be allocated one of the 10 partitions.

In some embodiments, a node includes a processor, memory, and a storage device. The storage device may be configured to store metadata associated with a plurality of objects that were backed up to secondary storage system 112, such as part or all of metadata store 114. For example, the metadata associated with the plurality of objects may include secondary storage system 112 generated metadata (e.g., metadata that enables the data associated with the object to be located). The node may be coupled to a separate storage device. The separate storage device may include one or more storage devices. A storage device may be segmented into a plurality of partitions. Each of the nodes 111, 113, 115 may be allocated one or more of the partitions. The one or more partitions allocated to a node may be configured to store data associated with some or all of the plurality of objects that were backed up to secondary storage system 112. For example, the separate storage device may be segmented into 10 partitions and storage device 112 may include 10 nodes. A node of the 10 nodes may be allocated one of the 10 partitions.

In some embodiments, a node includes a processor, memory, and one or more storage devices. A first storage device may be configured to store metadata associated with a plurality of objects that were backed up to secondary storage system 112, such as part or all of metadata store 114. For example, the metadata associated with the plurality of objects may include secondary storage system 112 generated metadata. A second storage device may be configured to store data associated with the plurality of objects that were backed up to secondary storage system 112. The plurality of storage devices may include one or more solid state drives, one or more hard disk drives, or a combination thereof.

Secondary storage system 112 may be a cloud instantiation of a secondary storage system. A configuration of cloud instantiation of secondary storage system 112 may be a virtual replica of secondary storage system 112. For example, secondary storage system 112 may be comprised of three storage nodes, each storage node with a storage capacity of 10 TB. A cloud instantiation of secondary storage system 112 may be comprised of three virtual nodes, each virtual node with a storage capacity of 10 TB. In other embodiments, a cloud instantiation of secondary storage system 112 may have more storage capacity than an on-premises instantiation of secondary storage system 112. In other embodiments, a cloud instantiation of secondary storage system 112 may have less storage capacity than an on-premises instantiation of secondary storage system 112.

Secondary storage system 112 may be configured to ingest a backup snapshot received from primary system 102 and to store the data associated with the backup snapshot in storage associated with the nodes 111, 113, 115 as a backup. Secondary storage system 112 may receive and ingest the file system data associated with a backup snapshot. Secondary storage system 112 may include a file system manager 117 that is configured to organize the file system data of the backup snapshot using an index. The index may be a tree data structure. An example of the tree data structure is a snapshot tree, which may be based on a B+ tree structure (or other type of tree structure in other embodiments). Secondary storage system 112 may store a plurality of tree data structures in metadata store 114. Secondary storage system 112 may generate a snapshot tree and one or more object metadata structures for each backup snapshot received for the primary system.

In the event the backup snapshot corresponds to a full backup of primary system 102, the full backup may include a view corresponding to the backup snapshot. The view may comprise a snapshot tree and one or more object metadata structures. The snapshot tree may be configured to store the file system metadata associated with primary system 102. An object metadata structure may be configured to store the metadata associated with one of the objects stored on primary system 102. Each of the objects included in a backup snapshot may have a corresponding object metadata structure at the secondary storage system.

In the event the backup snapshot corresponds to a full backup of one of the one or more objects 103, such as a virtual machine, the full backup may include a view corresponding to the backup snapshot. The view may be comprised of a snapshot tree and one or more object metadata structures. The snapshot tree may be configured to store the metadata associated with one of the one or more objects 103. An object metadata structure may be configured to store the metadata associated with a file included in the object, such as a file included in a virtual machine.

The tree data structure may be used to capture different views of data. A view of data may correspond to a full backup snapshot, an incremental backup snapshot, a constructive incremental backup snapshot, a clone of data, a file, etc. The tree data structure allows a chain of snapshot trees to be linked together by allowing a node of a later version of a snapshot tree to reference a node of a previous version of a snapshot tree. The previous version of the snapshot tree may correspond to an earlier backup snapshot. For example, a root node or an intermediate node of a snapshot tree corresponding to a second backup snapshot may reference an intermediate node or leaf node of a snapshot tree corresponding to a first backup snapshot.

A snapshot tree is a representation of a fully hydrated restoration point because it provides a complete view of a primary system, an object, or data generated on or by the secondary storage system at a particular moment in time. A fully hydrated restoration point is a restoration point that is ready for use without having to reconstruct a plurality of backups to use it. Instead of reconstructing a restoration point by starting with a full backup and applying one or more data changes associated with one or more incremental backups to the data associated with the full backup, secondary storage system 112 maintains fully hydrated restoration points. Any file associated with primary system 102, an object at a particular time and the object's contents, or a file generated on or by the secondary storage system, for which there is an associated reference restoration point, may be determined from the snapshot tree, regardless if the associated reference restoration was a full reference restoration point or an incremental reference restoration point.

A snapshot tree may include a root node, one or more levels of one or more intermediate nodes associated with the root node, and one or more leaf nodes associated with an intermediate node of the lowest intermediate level. The root node of a snapshot tree may include one or more pointers to one or more intermediate nodes. Each intermediate node may include one or more pointers to other nodes (e.g., a lower intermediate node or a leaf node). A leaf node may store file system metadata, data associated with a file that is less than a limit size (e.g., 256 kb), an identifier of a data brick, a pointer to a metadata structure (e.g., object metadata structure), a pointer to a data chunk stored on the storage cluster, etc.

An object metadata structure may include a root node, one or more levels of one or more intermediate nodes associated with the root node, and one or more leaf nodes associated with an intermediate node of the lowest intermediate level. The tree data structure associated with an object metadata structure allows a chain of object metadata structures corresponding to different versions of an object, an object file, or a file to be linked together by allowing a node of a later version of an object metadata structure to reference a node of a previous version of an object metadata structure. Each root node of the tree data structure may be associated with a different instance (e.g., version) of an object. The object metadata structure is configured to store metadata associated with an object that enables the data chunks associated with the object to be located.

A leaf node of an object metadata structure may store a value, such as an identifier of a data brick associated with one or more data chunks. The location of the one or more data chunks associated with a data brick may be identified using one or more data structures (e.g., list, table, etc.) stored in metadata store 114. A first data structure (e.g., chunk metadata table) may store information that associates a brick identifier with one or more chunk identifiers and one or more chunk file identifiers. A second data structure (e.g., chunk file metadata table) may associate a chunk file identifier with a chunk file storing a plurality of data chunks. In some embodiments, the first data structure and the second data structure are combined as a single data structure. The one or more data chunks associated with a data brick may be located based on the chunk metadata table and the chunk file metadata table. For example, a first data brick having a first brick identifier may be associated with a first chunk identifier (e.g., SHA-1 hash value). The first chunk identifier may be used in conjunction with the chunk metadata table to identify a chunk file identifier.

A chunk file having the identified chunk file identifier is comprised of a plurality of data chunks. An object to which the chunk file is associated, is comprised of a plurality of chunk files. In some embodiments, a chunk file is stored in a storage associated with one of the nodes 111, 113, 115. In some embodiments, a chunk file is stored across corresponding storages associated with the nodes 111, 113, 115. The chunk file metadata table may be used to identify a location of the plurality of data chunks. The chunk file metadata table may include offset information of the plurality of data chunks within a chunk file. The first or second data structure may indicate a node of the storage cluster that is associated with storage that stores a data chunk or a chunk file. Each of the nodes 111, 113, 115 may be associated with corresponding storage that stores a corresponding version of metadata store 114.

At some point in time, primary system 102 may become corrupted or go offline and need to be restored to a particular point in time, as described above. Secondary storage system 112 may receive from a user associated with primary system 102 a request to restore a specific backup to primary system 102. In some embodiments, the request is to restore the entire primary system to a particular point in time for which there is an associated backup. In some embodiments, the request is to restore an object to the particular point in time for which there is an associated backup. For example, the request may be to restore a particular backup (e.g., backed up version) of a VM to the primary system.

In response to the received request to restore the specific backup, secondary storage system 112 may create at a storage associated with the secondary storage system, such as nodes 111, 113, 115, a reference snapshot tree based on the specific backup stored at the storage associated with the secondary storage system. The reference snapshot tree may be created by cloning a root node of a snapshot tree associated with the specific backup. Cloning the root node of the snapshot tree associated with the specific backup may add an additional view to the chain of snapshot trees included in the tree data structure. The reference snapshot tree may be created after the restoration is completed. The reference snapshot tree may be created before the object or the primary system as a whole is set to a mutable, unlocked state in which changes to the data are permitted. Creating the reference snapshot tree after the restoration is complete but before the primary system is set to a mutable state ensures that the secondary storage system stores a current view of the primary system before any changes to the data are made, in case the primary system needs to be restored again.

The data associated with the backup is provided to primary system 102. In some embodiments, the data associated with the view corresponding to the specific backup is provided to primary system 102. In some embodiments, the data associated with the cloned view corresponding to the specific backup is provided to primary system 102. In some embodiments, object metadata associated with the specific backup is modified after the data associated with the backup is provided to primary system 102. For example, a virtual machine name may be modified, attributes associated with one or more objects may be customized, one or more tags may be applied to a virtual machine, permissions may be configured, etc.

In response to receiving the data associated with the backup, restore agent 107 may store in one or more storage volumes the data associated with the backup. In some embodiments, restore agent 107 performs a differential restore. A differential restore may include modifying and overwriting disks, such as the disks of a VM, using the data associated with the backup. For example, primary system 102 may already store some of the backup data for the particular point in time. The differential restore may include data not stored by primary system 102 that is required to modify primary system 102 into a state that corresponds to the particular point in time. Secondary storage system 112 may provide the primary system the data not stored by primary system 102 that is required to modify primary system 102 into a state that corresponds to the particular point in time. During a differential restore, a change tracker 106 may track changes to the data at the primary system 102.

In some embodiments, restore agent 107 performs a non-differential restore. A non-differential restore may include creating a new VM using the data associated with the backup. The non-differential restore may include all of the data associated with the backup that corresponds to the particular point in time. Secondary storage system 112 may provide primary system 102 all of the data that is required to restore primary system 102 to a state that corresponds to the particular point in time. During a non-differential restore, changes to the primary system 102 may not be tracked.

The data associated with the backup is in a locked state on primary system 102 (e.g., locked from users associated with primary system 102) while it is being restored to primary system 102. Primary system 102 may include change tracker 106 (e.g., change block tracker, resilient change tracking, etc.). Change tracker 106 may be configured to track the changes (e.g., changed data blocks) that have occurred since a checkpoint, which may correspond to a previous backup. The previous backup is associated with a corresponding tracking ID. Backup agent 107 may be configured to use the tracking ID associated with the previous backup to determine which data to include in an incremental backup snapshot.

Secondary storage system 112 may send to primary system 102 a command to create a new tracking ID. The command may be provided to change tracker 106. In response to receiving the command, change tracker 106 may create a new tracking ID and send to secondary storage system 112 the new tracking ID. The new tracking ID indicates a checkpoint from which a constructive incremental backup should be performed. After change tracker 106 creates the new tracking ID, primary system 102 may set the restored backup to a mutable state. The tracking ID may have an associated timestamp. A tracking ID created after data is restored can be used to create a constructive incremental backup that captures changes made since the primary system was restored and excludes other changes, such as changes made after the last backup and before the primary system was restored. The tracking ID is created after the data is restored but before changes are made to the primary system after the restore. This ensures that changes are captured relative to the tracking ID, but avoids configuration changes or changes during a differential restore being captured in the next backup, because this would be inefficient. The command to create a new tracking ID may cause the change tracker 106 to begin or resume tracking changes after a non-differential restore, for example. The new tracking ID may not correspond to a change in the change tracker 106. The change tracker 106 may create and assign new tracking IDs to each change in the primary system. The new tracking ID created in response to a command from the secondary storage system may not have an associated change, so that it represents a checkpoint only.

Primary system 102 may perform a backup snapshot after the data associated with the backup is restored. In some embodiments, primary system 102 may perform the backup snapshot according to a schedule (e.g., everyday at 12 am). Primary system may be configured to perform the backup snapshot based on a last created tracking ID or last tracking ID that is specified as a checkpoint. In some embodiments, secondary storage system 112 sends to primary system 102 a request to perform the backup snapshot based on the new tracking ID. Instead of performing an incremental backup snapshot by sending to secondary storage system 112 the data that has changed since a previous backup, primary system 102 may perform a constructive incremental backup snapshot and send to secondary storage system 112 the data that has changed since the tracking ID was created.

This is an efficient backup after a restore operation because the amount of data that is backed up to secondary storage system 112 is limited to the data that has changed since the restore operation. Furthermore, a full backup snapshot of primary system 102 does not need to be performed after the restore operation because secondary storage system 112 already stores most of the data that is to be included in the full backup of primary system 112. Thus, the amount of resources needed by primary system 102, network bandwidth, and the amount of resources needed by secondary storage system 112 to perform a backup after a restore operation is reduced.

Secondary storage system 112 may receive from primary system 102 the data associated with the constructive incremental backup snapshot, relative to the reference snapshot tree and may create a constructive incremental backup based on the constructive incremental backup snapshot, which includes a view that represents a state of the primary system 102 for a particular point in time at which the constructive incremental backup snapshot was performed. To generate the view, secondary storage system 112 may clone a root node of the tree data structure that corresponds to the reference snapshot tree and modify the tree data structure in a manner as described herein to reflect the state of primary system 112 for the particular point in time at which the constructive incremental backup snapshot was performed. Modification of the tree data structure may comprise traversing the tree data structure, comparing the view identifiers, and determining that a new node needs to be created, as will be described below.

FIG. 2A is a block diagram illustrating an embodiment of a tree data structure. A tree data structure may be used to represent a view of file system data that is stored on a secondary storage system, such as secondary storage system 112. The file system data may include metadata for a distributed file system and may include information, such as a chunk identifier, a chunk offset, file size, directory structure, file permissions, physical storage locations of the content files, inode information, etc. A file system manager, such as file system manager 117, may generate tree data structure 200. Tree data structure 200 may correspond to a full backup snapshot.

Tree data structure 200 is comprised of a snapshot tree that includes root node 202, intermediate nodes 212, 214, and leaf nodes 222, 224, 226, 228, 230. Although tree data structure 200 includes one intermediate level between root node 202 and leaf nodes 222, 224, 226, 228, 230, any number of intermediate levels may be implemented. Tree data structure 200 may correspond to a backup snapshot of file system data at a particular point in time, for example, at time t₀. The backup snapshot may be received from a primary system, such as primary system 102. The snapshot tree in conjunction with a plurality of object metadata structures may provide a complete view of the primary system associated with the backup snapshot for the particular point in time.

A root node is the starting point of a snapshot tree and may include pointers to one or more other nodes. An intermediate node is a node to which another node points (e.g., root node, other intermediate node) and includes one or more pointers to one or more other nodes. A leaf node is a node of the snapshot tree at the lowest level of the snapshot tree. Each node of the tree structure includes a view identifier of a view with which the node is associated (e.g., TreeID). A leaf node may be configured to store key-value pairs of file system data. A data key *k* is a lookup value by which a particular leaf node may be accessed. For example, "1" is a data key that may be used to lookup "DATA1" of leaf node 222.

A root node or an intermediate node may include one or more node keys. The node key may be an integer value or a non-integer value. Each node key indicates a division between the branches of the node and indicates how to traverse the tree structure to find a leaf node, i.e., which pointer to follow. For example, root node 202 may include a node key of "5." A data key *k* of a key-value pair that is less than or equal to the node key is associated with a first branch of the node and a data key *k* of a key-value pair that is greater than the node key is associated with a second branch of the node. In the above example, to find a leaf node storing a value associated with a data key of "1," "2," or "3," the first branch of root node 202 would be traversed to intermediate node 212 because the data keys of "1," "2," and "3" are less than or equal to the node key "5." To find a leaf node storing a value associated with a data key of "6" or "11," the second branch of root node 202 would be traversed to intermediate node 214 because data keys "6" and "11" are greater than the node key of "5."

A data key *k* of a key-value pair is not limited to a numerical value. In some embodiments, non-numerical data keys may be used for a data key-value pair (e.g., "name," "age," etc.) and a numerical number may be associated with the non-numerical data key. For example, a data key of "name" may correspond to a numerical key of "5." Data keys that alphabetically come before the word "name" or is the word "name" may be found following a left branch associated with a node. Data keys that alphabetically come after the word "name" may be found by following a right branch associated with the node. In some embodiments, a hash function may be associated with the non-numerical data key and may be used to determine which branch of a node is associated with a non-numerical data key. For example, a hash function may be applied to a non-numerical data key, resulting in a corresponding hash value; the hash value may be used to select which branch of a node is associated with the corresponding non-numerical data key. Accordingly, it can be determined that a first bucket is associated with a first branch of a node and a second bucket is associated with a second branch of the node.

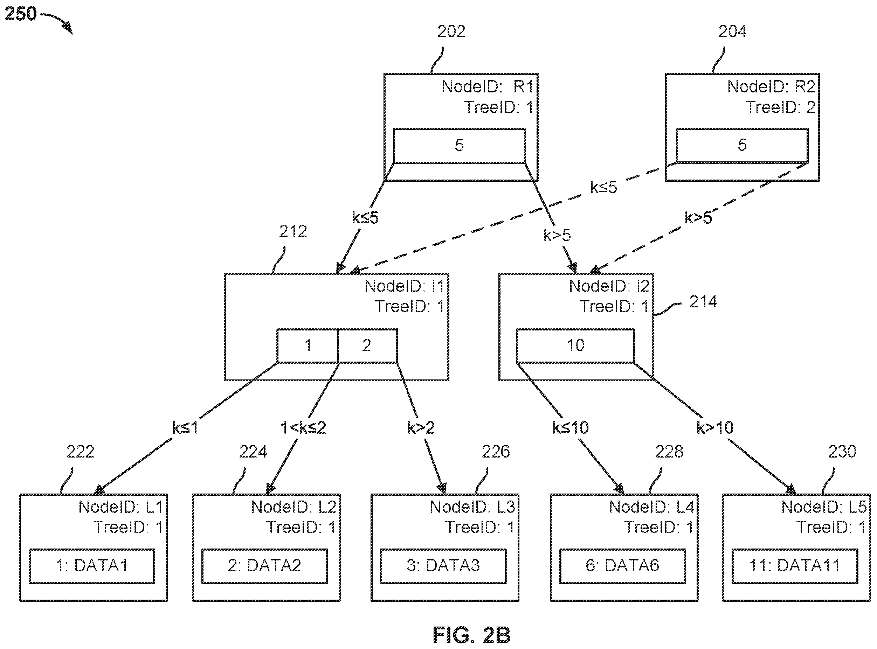

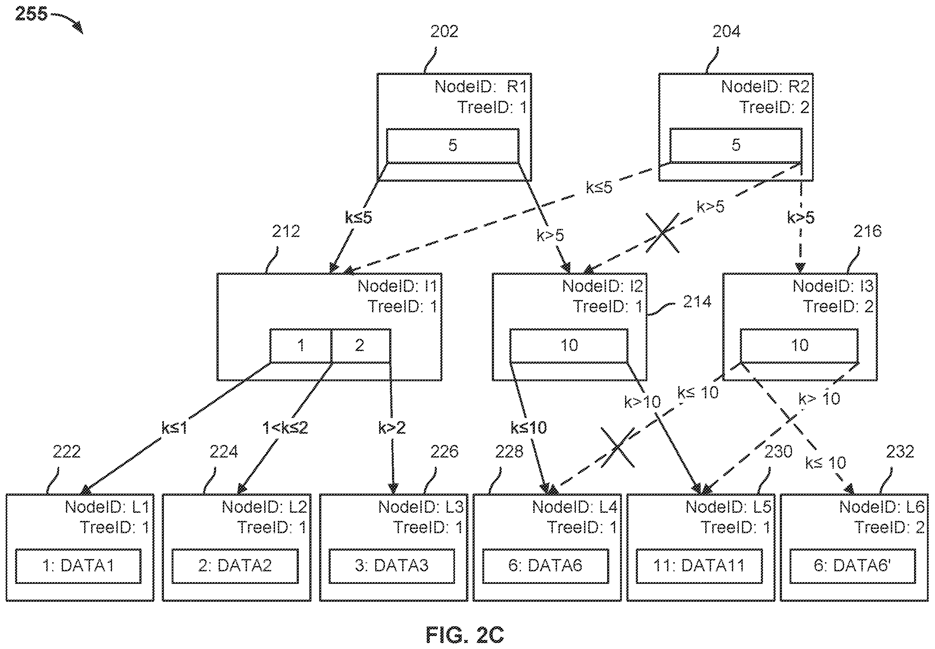

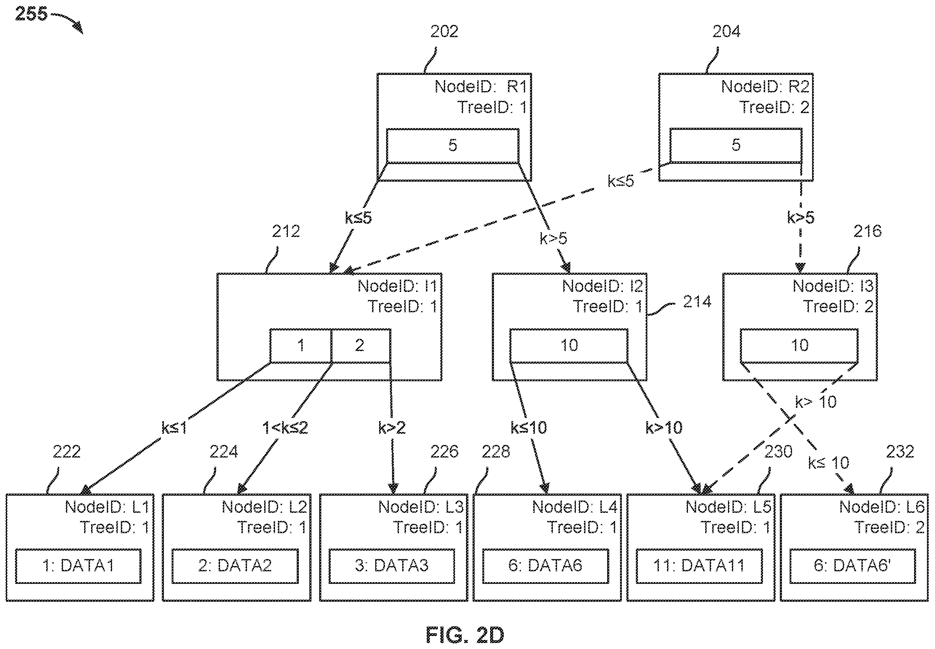

In the example shown, root node 202 includes pointers to intermediate node 212 and intermediate node 214. Root node 202 includes a NodeID of "R1" and a TreeID of "1." The NodeID identifies the name of the node. The TreeID, which may also be referred to as the view identifier, identifies the view with which the node is associated. When a change is made to data stored in a leaf node as described with respect to FIGS. 2B, 2C, and 2D, the TreeID is used to determine whether a copy of a node is to be made.

Root node 202 includes a node key that divides a set of pointers into two different subsets. Leaf nodes (e.g., "1-3") with a data key *k* that is less than or equal to the node key are associated with a first branch and leaf nodes (e.g., "6, 11") with a data key k that is greater than the node key are associated with a second branch. Leaf nodes with a data key of "1," "2," or "3" may be found by traversing tree data structure 200 from root node 202 to intermediate node 212 because the data keys have a value that is less than or equal to the node key. Leaf nodes with a data key of "6" or " 11 " may be found by traversing tree data structure 200 from root node 202 to intermediate node 214 because the data keys have a value that is greater than the node key.

Root node 202 includes a first set of pointers. The first set of pointers associated with a data key less than the node key (e.g., "1," "2," or "3") indicates that traversing tree data structure 200 from root node 202 to intermediate node 212 will lead to a leaf node with a data key of "1," "2," or "3." Intermediate node 214 includes a second set of pointers. The second set of pointers associated with a data key greater than the node key indicates that traversing tree data structure 200 from root node 202 to intermediate node 214 will lead to a leaf node with a data key of "6" or "11."

Intermediate node 212 includes pointers to leaf nodes 222, 224, 226. Intermediate node 212 includes a NodeID of "I1" and a TreeID of "1." Intermediate node 212 includes a first node key of "1" and a second node key of "2." The data key *k* for leaf node 222 is a value that is less than or equal to the first node key. The data key *k* for leaf node 224 is a value that is greater than the first node key and less than or equal to the second node key. The data key *k* for leaf node 226 is a value that is greater than the second node key. The pointer to leaf node 222 indicates that traversing tree data structure 200 from intermediate node 212 to leaf node 222 will lead to the node with a data key of "1." The pointer to leaf node 224 indicates that traversing tree data structure 200 from intermediate node 212 to leaf node 224 will lead to the node with a data key of "2." The pointer to leaf node 226 indicates that traversing tree data structure 200 from intermediate node 212 to leaf node 226 will lead to the node with a data key of "3."

Intermediate node 214 includes pointers to leaf nodes 228, 230. Intermediate node 212 includes a NodeID of "I2" and a TreeID of "1." Intermediate node 214 includes a node key of "10." The data key k for leaf node 228 is a value that is less than or equal to the node key. The data key *k* for leaf node 230 is a value that is greater than the node key. The pointer to leaf node 228 indicates that traversing tree data structure 200 from intermediate node 214 to leaf node 228 will lead to the node with a data key of "6." The pointer to leaf node 230 indicates that traversing tree data structure 200 from intermediate node 214 to leaf node 230 will lead to the node with a data key of "11."

Leaf nodes 222, 224, 226, 228, 230 include respective data key-value pairs of "1: DATA1," "2: DATA2," "3: DATA3," "6: DATA6," "11: DATA11." Leaf nodes 222, 224, 226, 228, 230 include respective Node IDs of "L1," "L2," "L3," "L4," "L5." Leaf nodes 222, 224, 226, 228, 230 all include a TreeID of "1." In some embodiments, leaf nodes 222, 224, 226, 228, or 230 are configured to store metadata. In other embodiments, leaf nodes 222, 224, 226, 228, or 230 are configured to store content file data when the size of the content file is less than or equal to a limit size. In other embodiments, leaf nodes 222, 224, 226, 228, or 230 are inodes and are configured to store a pointer to or an identifier of a respective object metadata structure (e.g., object metadata tree). In some embodiments, leaf node 222, 224, 226, 228, or 230 store a corresponding reference to a storage location of a corresponding object. In some embodiments, leaf nodes 222, 224, 226, 228, or 230 store corresponding object identifiers that are associated with corresponding objects. In some embodiments, the object identifier for an object corresponds to a particular inode id of the secondary storage system. In some embodiments, a node of the tree data structure stores an inode id of the secondary storage system that corresponds to the object. In some embodiments, the object identifier for the object is a file path. In some embodiments, a node of the tree data structure stores a file path that corresponds to the object.

FIG. 2B is a block diagram illustrating an embodiment of a cloned snapshot tree. A snapshot tree may be cloned when a snapshot tree is added to a tree data structure (e.g., when a specific backup is requested to be restored, when data associated with a snapshot tree is migrated, when data associated with a snapshot tree is replicated, when data associated with a snapshot tree is used for test/development purposes, etc.) In some embodiments, tree data structure 250 may be created by a secondary storage system, such as secondary storage system 112.

The file system data of a primary system, such as primary system 102, may be backed up to a secondary storage system, such as secondary storage system 112. A subsequent backup snapshot may correspond to an incremental backup snapshot or a constructive incremental backup snapshot. The tree data structure corresponding to the subsequent backup snapshot is generated in part by cloning a snapshot tree associated with a previous backup snapshot.

When performing a restore operation, a reference snapshot tree is generated by cloning a root node associated with a specifically requested backup. In the example shown, root node 202 corresponds to a root node associated with the specific requested backup. To restore the data associated with a snapshot tree having root node 202, a reference snapshot tree is generated by cloning root node 202 into root node 204.

In the example shown, tree data structure 250 includes root nodes 202, 204, intermediate nodes 212, 214, and leaf nodes 222, 224, 226, 228, and 230. Tree data structure 250 can be used to capture different versions of file system data at different moments in time. A tree data structure may also efficiently locate desired metadata by traversing a particular version of a snapshot tree included in the tree data structure. In some embodiments, the tree data structure allows a chain of backup snapshot versions (i.e., file system metadata snapshot forest) to be linked together by allowing a node of a later version of a snapshot tree to reference a node of a previous version of a snapshot tree. For example, a snapshot tree with root node 204 is linked to a snapshot tree with root node 202. Each time a backup snapshot is performed, a new root node may be created and the new root node includes the same set of pointers included in the previous root node, that is the new root node of the snapshot may be linked to one or more intermediate nodes associated with a previous snapshot. The new root node also includes a different NodeID and a different TreeID.

In some embodiments, a root node is associated with a current view of the file system data. A current view may still accept one or more changes to the data. In the example shown, root node 204 is associated with a current view of the file system data. In other embodiments, a root node is associated with a snapshot view of the file system data. A snapshot view may represent a state of the file system data at a particular moment in time in the past and is not updated. In the example shown, root node 202 is associated with a snapshot view of the file system data. As described above, the root node associated with the reference snapshot tree may be associated with a current view of the file system data. The reference snapshot tree is created to ensure that the current view of the file system data is set to the state of the primary system at the restore. In some embodiments, the current view of the file system data may be set to the specific backup from which the primary system was restored, and the reference snapshot tree may be created when the next backup snapshot is to be performed.

To generate a snapshot tree corresponding to an incremental backup snapshot or a constructive incremental backup snapshot at t₁, root node 202 is cloned, i.e., copied. In the example shown, root node 204 is a copy of root node 202. Similar to root node 202, root node 204 includes the same pointers as root node 202, but includes a different NodeID and a different TreeID. Root node 204 includes a first set of pointers to intermediate node 212. The first set of pointers associated with a data key *k* less than or equal to the node key (e.g., "1," "2," or "3") indicates that traversing tree data structure 250 from root node 204 to intermediate node 212 will lead to a leaf node with a data key of "1," "2," or "3." Root node 204 includes a second set of pointers to intermediate node 214. The second set of pointers associated with a data key *k* greater than the node key indicates that traversing tree data structure 250 from root node 204 to intermediate node 214 will lead to a leaf node with a data key of "6" or "11." Root node 204 includes a NodeID of "R2" and a TreeID of "2." This process may also be used to create the reference snapshot tree.

FIG. 2C is a block diagram illustrating an embodiment of modifying a cloned snapshot tree. In the example shown, tree data structure 255 may be modified by a file system manager, such as file system manager 117. A snapshot tree with a root node 204 may be a current view of the file system data, for example, at time t₁. A cloned snapshot tree may be modified to reflect the change data associated with an incremental backup snapshot or a constructive incremental backup snapshot.

In the example shown, the value *"DATA*6" has been modified to be *"DATA6'."* In some embodiments, the value of a key value pair has been modified. In other embodiments, the value of the key value pair is the file data associated with a content file that is smaller than or equal to a limit size. In other embodiments, the value of the key value pair points to a different metadata structure (e.g., a metadata structure corresponding to a different version of an object). The different metadata structure may be a modified version of the metadata structure to which the leaf node previously pointed. In some embodiments, the value of the key value pair no longer points to another node to which the node pointed.

To modify the snapshot tree at t₁, the file system manager starts at root node 204 because that is the root node associated with the snapshot tree at time t₁. The value *"DATA*6" is associated with the data key "6." The file system manager traverses tree data structure 255 from root node 204 until it reaches a target node, in this example, leaf node 228. The file system manager compares the TreeID at each intermediate node and leaf node with the TreeID of the root node. In the event the TreeID of a node matches the TreeID of the root node, the file system manager proceeds to the next node. In the event the TreeID of a node does not match the TreeID of the root node, a shadow copy of the node with the non-matching TreeID is made.

A shadow copy of a node is performed when the node is included in a plurality of snapshot trees (e.g., the snapshot tree with root node 202 and the snapshot tree with root node 204) and a value stored by the node has been updated between backup snapshots. The value stored by a node that is associated with a snapshot tree that corresponds to a previous backup snapshot is immutable. The shadow copy of the node enables a value stored by a node to be updated because the shadow copy of the node is not shared with one or more snapshot trees that correspond to one or more previous backup snapshots, rather, the shadow copy of the node is associated with the snapshot tree that corresponds to the incremental backup snapshot (a latest backup snapshot) or a constructive incremental backup snapshot.

A shadow copy may be a copy of a node and includes the same pointers as the copied node, but includes a different NodeID and TreeID. For example, to reach a leaf node with a data key of "6," the file system manager begins at root node 204 and proceeds to intermediate node 214. The file system manager compares the TreeID of intermediate node 214 with the TreeID of root node 204, determines that the TreeID of intermediate node 214 does not match the TreeID of root node 204, and creates a copy of intermediate node 214. The intermediate node copy 216 includes the same set of pointers as intermediate node 214, but includes a TreeID of "2" to match the TreeID of root node 204. The file system manager updates a pointer of root node 204 to point to intermediate node 216 instead of pointing to intermediate node 214. The file system manager traverses tree data structure 255 from intermediate node 216 to leaf node 228, determines that the TreeID of leaf node 228 does not match the TreeID of root node 204, and creates a copy of leaf node 228, i.e., a shadow copy. Leaf node copy 232 stores the modified value *"DATA*6'" and includes the same TreeID as root node 204. The file system manager updates a pointer of intermediate node 216 to point to leaf node 232 instead of pointing to leaf node 228. In some embodiments, leaf node 232 stores the value of a key value pair that has been modified. In other embodiments, leaf node 232 stores the modified data associated with a content file that is smaller than or equal to a limit size.

Nodes that correspond to new data may be added to tree data structure 255. Those nodes include a view identifier that corresponds to the view identifier of the snapshot tree with root node 204. For example, a leaf node may store new data and include a view identifier of "2." Intermediate node 216 may include a pointer to the new node.

FIG. 2D is a block diagram illustrating an embodiment of a modified snapshot tree. Tree data structure 255 shown in FIG. 2D illustrates a result of the modifications made to a snapshot tree as described with respect to FIG. 2C.

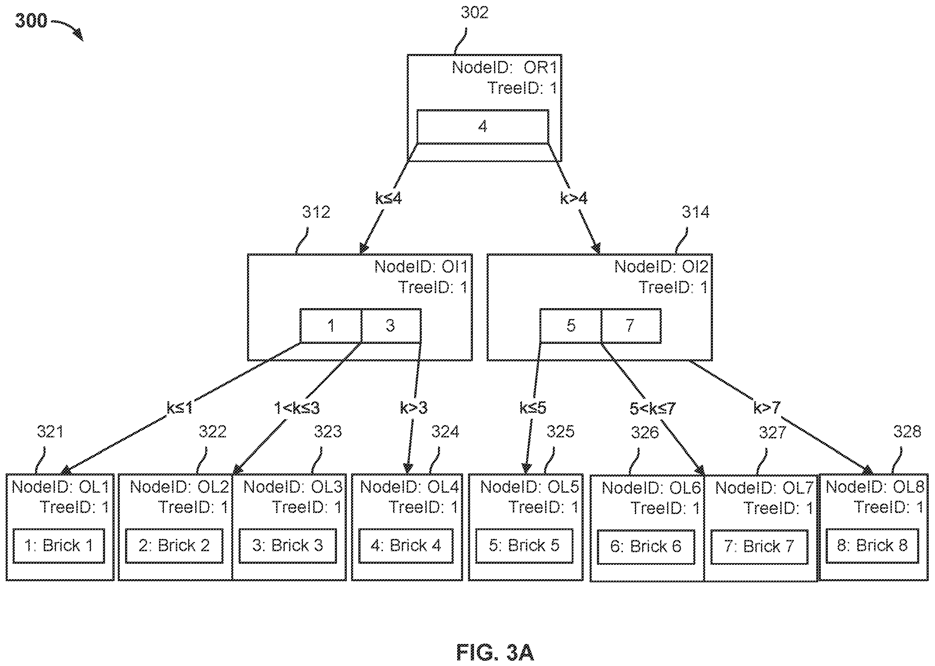

FIG. 3A is a block diagram illustrating an embodiment of a tree data structure. In some embodiments, tree data structure 300 may be created by a secondary storage system, such as secondary storage system 112. Tree data structure 300 may be used to store the metadata associated with an object that enables the data associated with the object to be located. In the example shown, tree data structure 300 corresponds to an object and stores the metadata associated with the object that enables the data associated with the object to be located. The metadata associated with an object that enables the data associated with the object to be located may be stored by a secondary storage system separate from the contents of the object, that is, the tree data structure storing the metadata associated with an object that enables the data associated with the object to be located is stored separately from the contents of the object. For example, the contents of the object may be stored on a hard disk drive, while tree data structure 300 that holds the object metadata may be stored in storage with faster access times, such as a solid state drive (SSD) of a storage node.

A leaf node of a snapshot tree associated with file system data, such as a leaf node of tree data structures 200, 250, 255, may include a pointer to a tree data structure (e.g., the root node of the tree data structure) that stores metadata corresponding to an object that enables the data associated with the object to be located, such as tree data structure 300. A tree data structure corresponding to an object and storing the metadata associated with the object is a snapshot tree, but is used to organize the data chunks associated with an object that are stored on the secondary storage system. An object metadata structure may be referred to as an object metadata tree.

A tree data structure corresponding to an object at a particular point in time (e.g., a particular version) may be comprised of a root node, one or more levels of one or more intermediate nodes, and one or more leaf nodes. In some embodiments, a tree data structure corresponding to an object is comprised of a root node and one or more leaf nodes without any intermediate nodes. Tree data structure 300 may be a snapshot of an object at a particular point in time *t*, for example at time t₀. Tree data structure 300 may correspond to a full backup of an object.

In the example shown, tree data structure 300 includes object root node 302, object intermediate nodes 312, 314, and object leaf nodes 321, 322, 323, 324, 325, 326, 327, 328. Similar to the snapshot trees described above, each node includes a "NodeID" that identifies the node and a "TreeID" that identifies a view with which the node is associated (e.g., a version of the content file). Root node 302 includes pointers to intermediate nodes 312, 314. Root node 302 includes a NodeID of "OR1" and a TreeID of "1."

In the example shown, intermediate node 312 includes respective pointers to leaf nodes 321, 322, 323, 324. Intermediate node 312 includes a NodeID of "OI1" and a TreeID of "1." Intermediate node 312 includes a first node key and a second node key. The data key *k* for leaf node 321 is a value that is less than or equal to the first node key. The data key for leaf nodes 322, 323 is a value that is greater than the first node key and less than or equal to the second node key. The data key for leaf node 324 is a value that is greater than the second node key. The pointer to leaf node 321 indicates that traversing tree data structure 300 from intermediate node 312 to leaf node 321 will lead to the node with a data key of "1." The pointer to leaf node 322 indicates that traversing tree data structure 300 from intermediate node 312 to leaf node 322 will lead to the node with a data key of "2." The pointer to leaf node 323 indicates that traversing tree data structure 300 from intermediate node 312 to leaf node 323 will lead to the node with a data key of "3." The pointer to leaf node 324 indicates that traversing tree data structure 300 from intermediate node 312 to leaf node 324 will lead to the node with a data key of "4."

In the example shown, intermediate node 314 includes respective pointers to leaf nodes 325, 326, 327, 328. Intermediate node 314 includes a NodeID of "OI2" and a TreeID of "1." Intermediate node 314 includes a first node key and a second node key.

The data key *k* for leaf node 325 is a value that is less than or equal to the first node key. The data key for leaf nodes 326, 327 is a value that is greater than the first node key and less than or equal to the second node key. The data key for leaf node 328 is a value that is greater than the second node key. The pointer to leaf node 325 indicates that traversing tree data structure 300 from intermediate node 314 to leaf node 325 will lead to the node with a data key of "5." The pointer to leaf node 326 indicates that traversing tree data structure 300 from intermediate node 314 to leaf node 326 will lead to the node with a data key of "6." The pointer to leaf node 327 indicates that traversing tree data structure 300 from intermediate node 314 to leaf node 327 will lead to the node with a data key of "7." The pointer to leaf node 328 indicates that traversing tree data structure 300 from intermediate node 314 to leaf node 328 will lead to the node with a data key of "8."

Leaf nodes 321, 322, 323, 324, 325, 326, 327, 328 include respective data key-value pairs of "1: Brick 1," "2: Brick 2," "3: Brick 3," "4: Brick 4," "5: Brick 5," "6: Brick 6," "7: Brick 7," and "8: Brick 8." "Brick 1," "Brick 2," "Brick 3," "Brick 4," "Brick 5," "Brick 6," "Brick 7," and "Brick 8" are brick identifiers that identify a data brick that is associated with one or more data chunks of an object corresponding to tree data structure 800. Leaf nodes 321, 322, 323, 324, 325, 326, 327, 328 each include a TreeID of "1." Leaf node 321 includes a NodeID of "OL1," leaf node 322 includes a NodeID of "OL2," leaf node 323 includes a NodeID of "OL3," leaf node 324 includes a NodeID of "OL4," leaf node 325 includes a NodeID of "OL5," leaf node 326 includes a NodeID of "OL6," leaf node 327 includes a NodeID of "OL7," and leaf node 328 includes a NodeID of "OL8."

An object is comprised of a plurality of data chunks. A brick may be associated with one or more data chunks. In the example shown, leaf nodes 321, 322, 323, 324, 325, 326, 327, 328 each store a corresponding brick identifier. A metadata store, such as metadata store 114, may include one or more data structures that associate a brick identifier with one or more corresponding chunk identifiers and a corresponding location (physical location) of the one or more data chunks associated with the one or more corresponding chunk identifiers. For example, a metadata store may store a first data structure (e.g., chunk metadata table) that is configured to associate brick identifiers with chunk identifiers and chunk file identifiers. The metadata store may store a second data structure (e.g., chunk file metadata table) that associates a chunk file identifier with a chunk file storing a plurality of data chunks. In some embodiments, the first data structure and the second data structure are combined as a single data structure.

The one or more data chunks associated with a data brick may be located based on the chunk metadata table and the chunk file metadata table. For example, a first data brick having a first brick identifier may be associated with a first chunk identifier (e.g., SHA-1 hash value). The first chunk identifier may be used in conjunction with the chunk metadata table to identify a chunk file identifier. A chunk file having the identified chunk file identifier is comprised of a plurality of data chunks. The chunk file metadata table may be used to identify a location of the plurality of data chunks. The chunk file metadata table may include offset information of the plurality of data chunks within a chunk file.

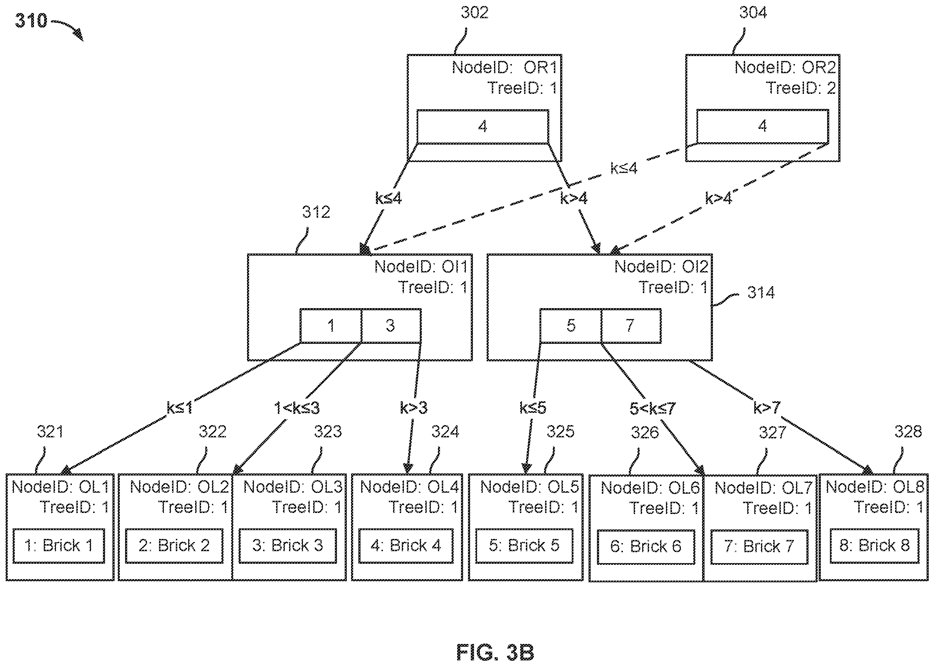

FIG. 3B is a block diagram illustrating an embodiment of a cloned object metadata structure. An object metadata structure may be cloned when a subsequent version of an object is stored on a secondary storage system, for example when an incremental backup snapshot or a constructive incremental backup snapshot is performed. In some embodiments, tree data structure 310 may be created by a secondary storage system, such as secondary storage system 112. In the example shown, tree data structure 310 corresponds to an object, but stores metadata that allows the data associated with the object to be located. The tree data structure corresponding to an object can be used to capture different versions of an object at different moments in time. In some embodiments, the tree data structure allows a chain of object metadata structures corresponding to different versions of an object to be linked together by allowing a node of a later version of an object metadata structure to reference a node of a previous version of an object metadata structure. The object metadata structure corresponding to a subsequent version of an object may be generated in part by cloning the metadata structure corresponding to a previous version of an object.

A root node or an intermediate node of a version of an object metadata structure may reference an intermediate node or a leaf node of a previous version of an object metadata structure. Similar to the snapshot tree, the object metadata structure allows different versions of an object to share nodes and allows changes to an object to be tracked. When a backup snapshot is received, a root node of the object metadata structure may be linked to one or more intermediate nodes associated with a previous object metadata structure. This may occur when data associated with an object is included in both backup snapshots.

In the example shown, tree data structure 310 includes a first object metadata structure comprising root node 302, intermediate nodes 312, 314, and leaf nodes 321, 322, 323, 324, 325, 326, 327, 328. Tree data structure 310 also includes a second object metadata structure that may be a snapshot of file data at a particular point in time, for example at time t₁. The second object metadata structure is comprised of root node 304, intermediate nodes 312, 314, and leaf nodes 321, 322, 323, 324, 325, 326, 327, 328. To create a snapshot of the file data at time *t*₁, a new root node is created by cloning the previous root node. The cloned root node includes the same set of pointers as the previous root node, but includes a different NodeID and a different TreeID. In the example shown, root node 304 includes a set of pointers to intermediate nodes 312, 314, which are intermediate nodes associated with a previous snapshot. The TreeID is the view identifier associated with a view of the object metadata structure at a particular moment in time. The TreeID of a root node indicates a view with which the root node is associated (e.g., object version). For example, root node 302 with a TreeID of "1" is associated with a first backup snapshot and root node 304 with a TreeID of "2" is associated with a second backup snapshot.

In the example shown, root node 304 is a clone (i.e., a copy) of root node 302. Similar to root node 302, root node 304 includes the same pointers as root node 302. Root node 304 includes a first set of pointers to intermediate node 312. The first set of pointers associated with a data key (e.g., "1," "2," "3," or "4") less than or equal to the node key indicates that traversing an object metadata structure included in tree data structure 310 from root node 304 to intermediate node 312 leads to a leaf node with a data key of "1," "2," "3," or "4." Root node 304 includes a second set of pointers to intermediate node 314. The second set of pointers associated with a data key greater than the node key indicates that traversing an object metadata structure included in tree data structure 310 from root node 304 to intermediate node 314 leads to a leaf node with a data key of "5," "6," "7," or "8." Root node 304 includes a NodeID of "OR2" and a TreeID of "2."

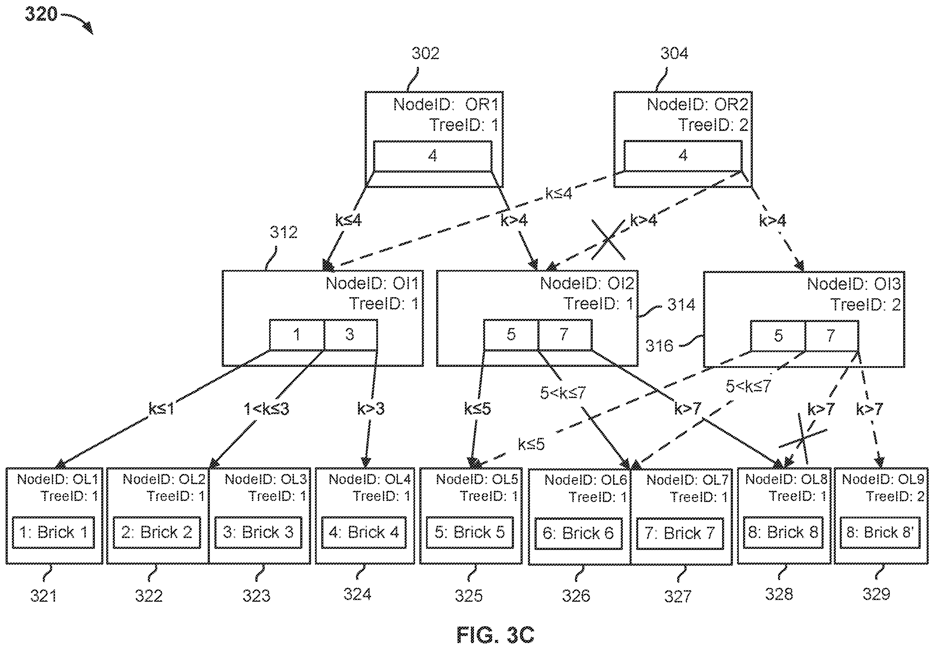

FIG. 3C is a block diagram illustrating an embodiment of modifying a cloned metadata structure. Tree data structure 320 is comprised of a first object metadata structure that includes root node 302 and a second object metadata structure that includes root node 304. In the example shown, tree data structure 320 may be modified by a file system manager, such as file system manager 117. The modifications may correspond to modifications included in an incremental backup snapshot or a constructive incremental backup snapshot.

In some embodiments, the file data associated with an object may be modified such that one of the data chunks is replaced by another data chunk. When a data chunk of object data associated with a previous backup snapshot is replaced with a new data chunk, the data brick associated with the new data chunk may be different. A leaf node of an object metadata structure stores a brick identifier of a data brick that is associated with a data chunk. To represent this modification to the object data, a corresponding modification is made to a current view of an object metadata structure. The current view of the object metadata structure is modified because the previous object metadata structure is a snapshot view and can no longer be modified. The data chunk of the object data that was replaced has a corresponding leaf node in the previous object metadata structure. A new leaf node in the current view of the object metadata structure is created, as described herein, that corresponds to the new data chunk. The new leaf node includes an identifier associated with the current view. The new leaf node may also store the chunk identifier associated with the modified data chunk.

In the example shown, a data chunk associated with "Brick 8" has been modified. The data chunk associated with "Brick 8" has been replaced with a data chunk associated with "Brick 8'." At t₁, the file system manager starts at root node 304 because that is the root node associated with the object metadata structure at time t₁. The value "Brick 8" is associated with the data key "8." The file system manager traverses tree data structure 320 from root node 304 until it reaches a target node, in this example, leaf node 328. The file system manager compares the TreeID at each intermediate node and leaf node with the TreeID of the root node. In the event the TreeID of a node matches the TreeID of the root node, the file system manager proceeds to the next node. In the event the TreeID of a node does not match the TreeID of the root node, a shadow copy of the node with the non-matching TreeID is made. A shadow copy is a copy of a node and includes the same pointers as the copied node, but includes a different NodeID and TreeID. For example, to reach a leaf node with a data key of "8," the file system manager begins at root node 304 and proceeds to intermediate node 314. The file system manager compares the TreeID of intermediate node 314 with the TreeID of root node 304, determines that the TreeID of intermediate node 314 does not match the TreeID of root node 304, and creates a copy of intermediate node 314. The intermediate node copy 316 includes the same set of pointers as intermediate node 314, but includes a TreeID of "2" to match the TreeID of root node 304. The file system manager updates a pointer of root node 304 to point to intermediate node 316 instead of pointing to intermediate node 314. The file system manager traverses tree data structure 320 from intermediate node 316 to leaf node 328, determines that the TreeID of leaf node 328 does not match the TreeID of root node 304, and creates a copy of leaf node 328. Leaf node 329 is a copy of leaf node 328, but stores the brick identifier "Brick 8'" and includes the same TreeID as root node 304. The file system manager updates a pointer of intermediate node 316 to point to leaf node 329 instead of pointing to leaf node 328.

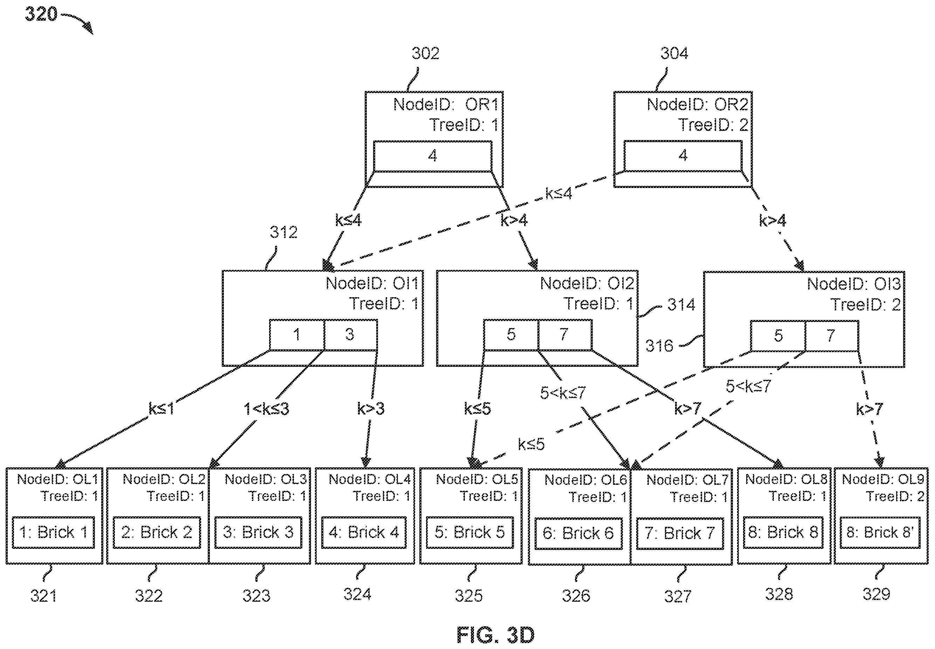

FIG. 3D is a block diagram illustrating an embodiment of a modified object metadata structure. The tree data structure 320 shown in FIG. 3D illustrates a result of the modifications made to tree data structure 320 as described with respect to FIG. 3C.

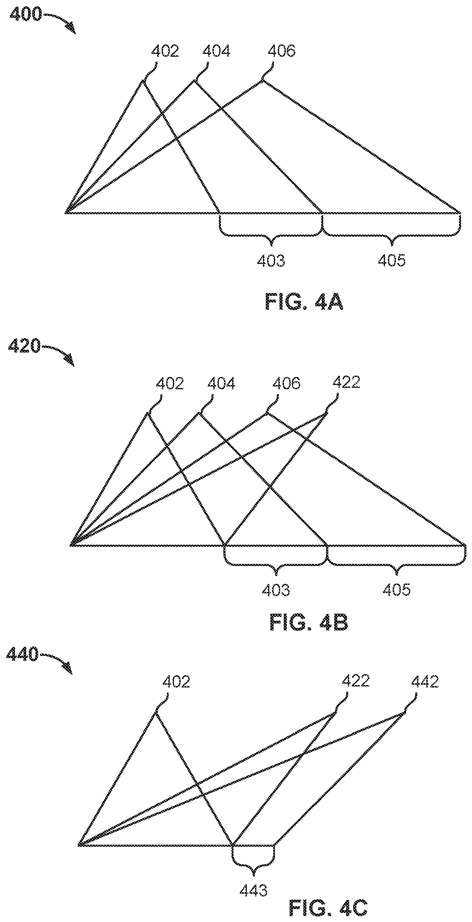

FIG. 4A is a diagram illustrating a tree data structure in accordance with some embodiments. In the example shown, tree data structure 400 includes a chain of snapshot trees, including a first snapshot tree 402, a second snapshot tree 404, and a third snapshot tree 406. The chain of snapshot trees may represent a chain of object metadata structures, and references to snapshot trees herein are also considered to be to object metadata structures. A secondary storage system, such as secondary storage system 112, may generate tree data structure 400 for data that is backed up from a primary system, such as primary system 102, to the secondary storage system. In particular, a first backup snapshot may be performed by the primary system 102 and file system data associated with the first backup snapshot may be sent to the secondary storage system. The secondary storage system may store the file system data and generate the first snapshot tree 402 to create the first backup at the secondary storage system. At a later point in time, a second backup snapshot may be performed by the primary system 102 and stored at the secondary storage system as a second backup including a generated second snapshot tree 404. The same process may be performed for a third backup snapshot, corresponding to a third backup and the third snapshot tree 406.

Snapshot tree 402 may correspond to a first backup snapshot that was performed by the primary system at a first point in time (e.g., Monday) and a first backup created by the secondary storage system based on the first backup snapshot. The first backup snapshot may correspond to a full backup snapshot or an incremental backup snapshot.

Snapshot tree 404 may correspond to a second backup snapshot that was performed at a second point in time (e.g., Tuesday) and a second backup created by the secondary storage system based on the second backup snapshot. The second backup snapshot corresponds to an incremental backup snapshot. Snapshot tree 404 may be generated by cloning a root node of snapshot tree 402 and modifying snapshot tree 404 based on file system data received from the primary system in the incremental backup snapshot. Changes to the primary system that occurred after the first point in time are represented as change data 403. The snapshot tree 404 therefore comprises data chunks corresponding to the first backup snapshot (represented by snapshot tree 402) and changes to the data blocks since the first backup snapshot, represented by change data 403.

Snapshot tree 406 may correspond to a third backup snapshot that was performed at a third point in time (e.g., Wednesday) and a third backup created by the secondary storage system based on the third backup snapshot. The third backup snapshot corresponds to an incremental backup snapshot. Snapshot tree 406 may be generated by cloning a root node of snapshot tree 404 and modifying snapshot tree 406 in a manner as described herein. Changes to the primary system that occurred after the second point in time are represented as change data 405.

FIG. 4B is a diagram illustrating a tree data structure in accordance with some embodiments. In the example shown, tree data structure 420 includes a chain of snapshot trees 402, 404, 406, 422. The tree data structure 420 comprises first, second, and third snapshot trees 402, 404, 406, as in tree data structure 400 as shown in FIG. 4A as well as a fourth snapshot tree 422.

The fourth snapshot tree 422 is a reference snapshot tree. As described above, at some point in time (e.g., Thursday in this example), a primary system may go offline or become corrupted and need to be restored to a particular point in time. A secondary storage system may receive a request to restore a specific backup to the primary system. The specific backup corresponds to a particular point in time. In this example, the specific backup corresponds to the first point in time (e.g., Monday), represented by a first backup that includes the first snapshot tree 402. In response to receiving the request, the secondary storage system may restore data associated with snapshot tree 422 or data associated with snapshot tree 402 to the primary system and may clone snapshot tree 402, i.e., the snapshot tree that corresponds to the first point in time, to generate the fourth snapshot tree 422.

While the first, second, and third snapshot trees 402, 404, 406 correspond to first, second, and third backups and backup snapshots, the fourth snapshot tree 422 is a reference snapshot tree created in response to a restore operation. In other words, while the snapshot trees 402, 404, 406 are created in response to receiving file system data from a primary system in order to create backup, reference snapshot tree 422 is created without receiving file system data from the primary system, and is instead created in response to a restore operation.

FIG. 4C is a diagram illustrating a tree data structure in accordance with some embodiments. In the example shown, tree data structure 440 includes a chain of snapshot trees 402, 422, 442. Snapshot trees 404, 406 may be included in tree data structure 440, but are not illustrated for explanation purposes. FIG. 4C shows the first and fourth snapshot trees 402 and 422, as well as a fifth snapshot tree 442.

In some embodiments, tree data structure 400 includes a chain of object metadata structures 402, 422, 442. Object metadata structure 404, 406 may be included in tree data structure 440, but are not illustrated for explanation purposes.

The fifth snapshot tree 442 is created as part of a fourth backup of the primary system. The primary system may perform an incremental, fourth backup snapshot after the data associated with snapshot tree 422 is restored. File system data associated with the fourth backup snapshot is sent to the secondary storage system to create a fourth backup at the secondary storage system that includes the fifth snapshot tree 442. The fourth backup snapshot may be performed based on the reference snapshot tree, thereby meaning that the incremental, fourth backup snapshot and backup contain changes to the object(s) or primary system as a whole since the fourth snapshot tree, which is the state of the primary system at the time it was restored. The fourth backup snapshot and backup may therefore be referred to as a constructive incremental backup snapshot and constructive incremental backup respectively. A constructive incremental backup snapshot and a constructive incremental backup include file system data that has changed since a most recent snapshot tree, which may also be referred to as a most recent view of the tree data structure. In contrast to the earlier incremental backup snapshots, such as those having snapshot trees, 404, 406, which are performed relative to a most recent backup, the fourth backup snapshot corresponding to snapshot tree 442 is performed based on a most-recent snapshot tree 422 or view of the tree data structure 440.

In general, therefore, backups are created at a secondary storage system prior to the restore based on backup snapshots performed by the primary system. The backups represent a state of the object(s) or primary system at a particular point in time. The backups comprise data blocks associated with the object at the particular point in time and corresponding snapshot trees. Incremental backups may include snapshot trees based on earlier snapshot trees. In response to a restore request identifying a specific point in time, backup, or backup snapshot, data is provided to the primary system based on the associated backup at the secondary storage system. The restore request may be made because a primary system is offline or corrupted. The request may identify a backup that is earlier than the most recent backup, because this is a point at which the user knows the primary system was not corrupted or offline, or because the primary system was known to be operational at this point in time. Once the primary system has been restored, a reference snapshot tree is created based on the snapshot tree associated with the specific backup from which the primary system was restored. A subsequent incremental backup is made relative to the reference snapshot tree. Subsequent incremental backups after this one are made relative to a most recent incremental backup.

As described above, the primary system may include a change tracker. The change tracker may be configured to track the data blocks that have changed since a checkpoint, which may correspond to previous backup. The secondary storage system may send to the change tracker a command to create a tracking ID. Instead of performing an incremental backup snapshot by sending to the secondary storage system the data that has changed since a previous backup, the primary system may perform a constructive incremental backup snapshot and send to the secondary storage system the data that has changed since the tracking ID was created. This changed data is represented as change data 443.

This is an efficient backup after a restore operation because the amount of data that is backed up to the secondary storage system is limited to the data that has changed since the restore operation.

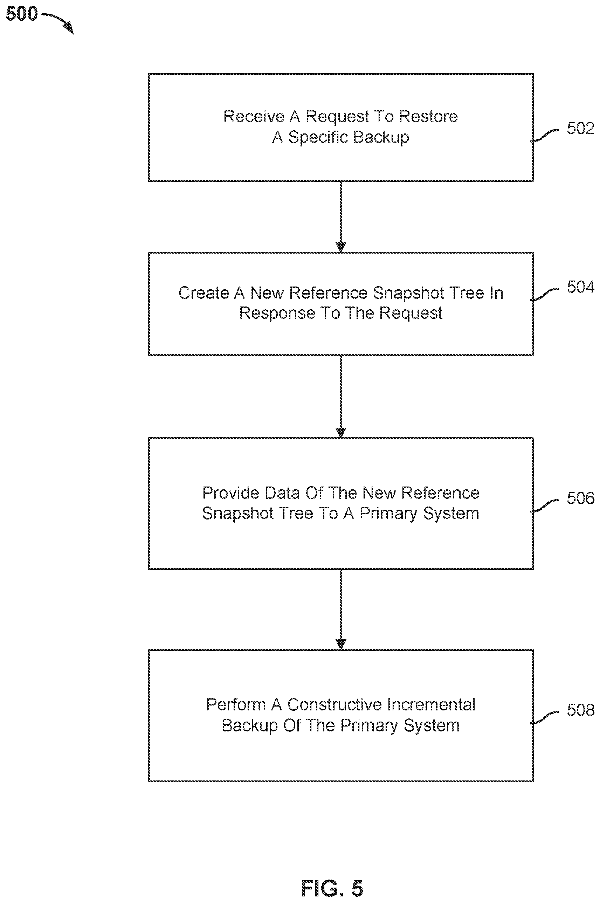

FIG. 5 is a flow diagram illustrating the process for performing an efficient backup after a restore operation **.** Process 500 is implemented by a secondary storage system, such as secondary storage system 112.

Prior to process 500, a first backup and a second backup may have been created at the secondary storage system, at least. The first backup may be a full backup or an incremental backup, based on a yet earlier backup. The second backup may be an incremental backup based on the first backup, and may represent a most recent backup. The first backup represents a state of an object at a first point in time, while the second backup represents a state of the object at a second point in time. Each backup has an associated snapshot tree.

At 502, a request to restore a specific backup is received, i.e. the first backup. The request may be received from a user associated with the primary system via the user's device. In some embodiments, the request is received from the primary system. In some embodiments, the request is received from a cloud portal or management system associated with a primary system and/or secondary storage system. In some embodiments, the request is received at a user interface associated with the secondary storage system.

The request is to restore to the primary system an object to its state at the first point in time. The object may correspond to a file, a database, a virtual machine, an application, a volume, etc. In some examples, the request may be to restore the entire primary system to its state at the first point in time.

At 504, a reference snapshot tree is created in response to the request. The reference snapshot tree may be created at a storage associated with a secondary storage system based on the specific backup. The reference snapshot tree may be created by cloning a root node of a snapshot tree associated with the specific backup. The snapshot tree may be included in a tree data structure that is comprised of one or more snapshot trees. Cloning the root node of the snapshot tree associated with the specific backup may add an additional view to the chain of snapshot trees included in the tree data structure. Where the earlier backups represent the state of the object at a first and second point in time respectively, the reference snapshot tree represents the state of the object at a third point in time, corresponding to the point in time at which the primary system was restored. The state of the object or primary system is therefore the same in the primary system and the secondary storage system at the first and third points in time.

At 506, data of the backup is provided to a primary system from a storage associated with a secondary storage system. A secondary storage system may traverse a snapshot tree to locate the data of the backup. In some embodiments, the secondary storage system traverses the snapshot tree associated with the specific backup to locate the data of the backup. In some embodiments, the secondary storage system traverses the snapshot tree associated with the reference snapshot tree to locate the data of the backup.

In response to receiving the data associated with the backup, the primary system may store in one or more storage volumes the data associated with the backup to restore the primary system to the particular point in time. Subsequently, the primary system may modify the object metadata associated with the backup. For example, a virtual machine name may be modified, attributes associated with one or more objects may be customized, one or more tags may be applied to a virtual machine, etc.

The primary system may include a change tracker. The secondary storage system may send to the primary system a command to create a new tracking ID. The primary system may provide the command to the change changer, which creates the new tracking ID. The new tracking ID indicates a checkpoint from which a constructive incremental backup should be performed. A tracking ID created after data is restored can be used to create an incremental backup that captures changes made since the primary system was restored and excludes other changes, such as changes made after the last backup snapshot and before the primary system was restored. The command may be sent to the primary system using an API call configured for creating new tracking IDs.

At 508, a constructive incremental backup of the primary system is performed based on the reference snapshot tree. In some embodiments, the secondary storage system sends to the primary system a request to perform a constructive incremental backup snapshot based on the new tracking ID. The secondary storage system may receive from the primary system the data associated with the constructive incremental backup snapshot and may create the constructive incremental backup. To generate a view of file system data that represents a state of the primary system for a particular point in time at which the constructive incremental backup was created, the secondary storage system may clone a root node of the snapshot tree that corresponds to the reference snapshot tree and modify the snapshot tree and any associated object metadata structures in a manner as described herein to reflect the state of the primary system for the particular point in time at which the constructive incremental backup was created.

This backup may therefore represent a state of the object at a fourth point in time, that is after the third point in time.

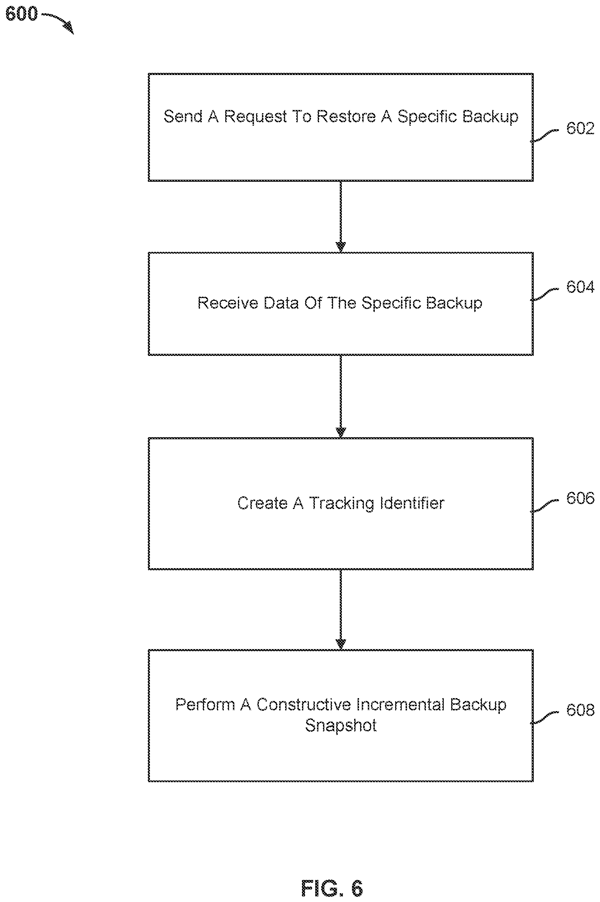

FIG. 6 is a flow diagram illustrating an embodiment of a process for performing an efficient backup after a restore operation in accordance with some embodiments. In the example shown, process 600 may be implemented by a system, such as primary system 112.

At 602, a request to restore a specific backup is sent. A primary system may become corrupted and need to be restored to a particular point in time. For example, a volume of the primary system may become corrupted. In some embodiments, the request is to restore the entire primary system to a particular point in time for which there is an associated backup. In some embodiments, the request is to restore to the primary system one or more objects associated with the particular point in time for which there is an associated backup. For example, the request may be to restore a particular version of a VM to the primary system. The request may be to restore a particular database and associated database files to the primary system.

In some embodiments, 602 is optional. For example, as described with respect to step 502, the request may be received from a user associated with a primary system via the user's device, a cloud portal or management system associated with a primary system and/or a secondary storage system, a user interface associated with the secondary storage system, etc.

At 604, data associated with the specific backup is received. In some embodiments, the data associated with the specific backup includes file system data to restore the entire primary system to a particular point. In some embodiments, the data associated with the specific backup includes file system data to restore an object associated with the particular point in time for which there is an associated backup snapshot.

In some embodiments, the primary system modifies object metadata associated with an object after receiving the data associated with the specific backup. For example, a virtual machine name may be modified, attributes associated with one or more objects may be customized, one or more tags may be applied to a virtual machine, etc.

At 606, a tracking identifier is created. The tracking ID indicates a checkpoint from which an incremental backup snapshot should be performed. The primary system may be configured to perform an incremental backup snapshot based on the tracking ID associated with a previous backup, but in the event a new tracking ID is created, the primary system may be configured to perform a constructive incremental backup snapshot based on changed data that occurred after a timestamp associated with the tracking ID instead of based on changed data that occurred since a tracking ID associated with a previous backup. The primary system may send the tracking ID to the secondary storage system.

At 608, a constructive incremental backup snapshot ᵢs performed. The primary system may perform a backup snapshot after the data associated with the backup is restored. In some embodiments, the primary system may perform the backup snapshot according to a schedule (e.g., everyday at 12 am). The primary system may be configured to perform the backup snapshot based on a last created tracking ID. The primary system may receive from the secondary storage system a request to perform a constructive incremental backup based on a tracking ID. Instead of performing an incremental backup snapshot based on a tracking ID associated with a previous backup snapshot, the primary system may perform a constructive incremental backup snapshot based on the tracking ID created at 606 and send to the secondary storage system the data that has changed since the tracking ID was created. This is an efficient backup after a restore operation because the amount of data that is backed up to the secondary storage system is limited to the data that has changed since the restore operation. Other incremental backups may include data that has changed after the last backup snapshot and before the restore operation. Furthermore, a full backup snapshot of the primary system does not need to be performed after the restore operation because the secondary storage system already stores most of the data that is to be included in the full backup snapshot of the primary system. Thus, the amount of resources needed by the primary system to perform a backup snapshot after a restore operation is reduced.

It can be seen from FIG. 6 that by implementing the features described above at the secondary storage system, the additional actions required to implement a more efficient backup using the primary system are restricted to creating a new tracking ID and performing a backup snapshot in a different way that reduces the data transferred. Thus, the advantages of the present invention are achieved without burdening the primary system, utilizing a few existing features to achieve an improvement in the combined operation of the secondary storage system and the primary system.

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided along with accompanying figures that illustrate the principles of the invention. The invention is described in connection with such embodiments, but the invention is not limited to any embodiment. The scope of the invention is limited only by the claims. Numerous specific details are set forth in the description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

## Claims

1. A computer-implemented method comprising:
creating, by a secondary storage system (112), a first backup of an object stored at a primary system (102), wherein the first backup represents a state of the object at a first point in time, and comprises a first data structure (402) and data associated with the object;
creating, by the secondary storage system (112), a second backup of the object, wherein the second backup represents a state of the object at a second point in time and comprises a second data structure (404) that is based on the first data structure (402) and data (403) corresponding to changes in the object between the first point in time and the second point in time, and thereafter;
receiving (502), at the secondary storage system (112), a request to restore the object to its state at the first point in time based on the first backup;
providing (506), by the secondary storage system (112), the data of the first backup to the primary system (102) to restore the object to its state at the first point in time;
generating (504), by the secondary storage system (112), in response to the request and without receiving data associated with the object from the primary system (102), a third data structure (422) that is a copy of the first data structure and that represents the state of the object at a third point in time; and
creating (508), by the secondary storage system (112), a third backup of the object, wherein the third backup represents a state of the object at a fourth point in time and comprises a fourth data structure (442) that is based on the third data structure (422) and data (443) corresponding to changes in the object between the third point in time and the fourth point in time.

2. The computer-implemented method of claim 1, wherein the first data structure (402), second data structure (404), third data structure (422), and fourth data structure (442) comprise a first tree data structure, a second tree data structure, a third tree data structure and a fourth tree data structure respectively.

3. The computer-implemented method of claim 2, wherein:
the first tree data structure (402) comprises:
a first root node;
one or more first intermediate nodes; and
one or more first leaf nodes, wherein each of the nodes of the first tree data structure (402) has a first view identifier;
the second tree data structure (404) comprises:
a second root node;
one or more second intermediate nodes; and
a second leaf node, wherein the second root node has one or more pointers that are included in the first root node and at least one pointer to a second intermediate node, and wherein the one or more second intermediate nodes include a pointer to the second leaf node, wherein the second leaf node corresponds to data that has changed in the object when compared to the first tree data structure (404), and wherein each of the second nodes have a second view identifier; and
wherein generating (504) the third data structure (422) based on the first data structure (402) comprises:
creating a third root node that is a clone of the first root node, wherein the third root node has the same pointers as the first root node and a third view identifier; and
replacing, as a current view identifier, the second view identifier with the third view identifier, wherein the third backup is created based, at least in part, on the third view identifier.

4. The computer-implemented method of claim 3, wherein creating (508) the third backup of the object comprises:
creating the fourth tree data structure (442) as a copy of the third tree data structure (422);
receiving data corresponding to changes in the object at the primary system (102) when compared to the third tree data structure (422); and
modifying the fourth tree data structure (442) to indicate the data (443) corresponding to changes in the object at the primary system (102) when compared to the third tree data structure (422).

5. The computer-implemented method of claim 4, wherein creating the fourth tree data structure (442) comprises:
creating a fourth root node that is a clone of the third root node, the fourth root node having the same pointers as the third root node and having a fourth view identifier; and
storing the fourth view identifier as a current view identifier,
wherein modifying the fourth tree data structure (442) comprises:
creating a new intermediate node and a new leaf node, wherein the new intermediate node includes a pointer to the new leaf node and wherein the new leaf node corresponds to data that has changed in the object at the primary system (102) when compared to the third tree data structure (422); and
modifying a pointer of the fourth root node to refer to the new intermediate node.

6. The computer-implemented method of any one of the preceding claims, wherein the data of the first backup that is provided to the primary system (102) is set in a locked state at the primary system (102) in which changes to the data are prevented, and wherein the method comprises, after generating (504) the third data structure (422), causing the primary system (102) to set the data of the first backup that is provided to the primary system (102) in an unlocked state in which changes to the data are allowed.

7. The computer-implemented method of any one of the preceding claims, wherein the primary system (102) is configured to track changes to data of the object at the primary system (102) relative to a checkpoint, and wherein the method comprises, after providing (506) the data of the first backup to the primary system (102) and before creating (508) the third backup of the object, causing the primary system (102) to create a new checkpoint, the third backup being based on the new checkpoint.

8. The computer-implemented method of claim 7, wherein the data (443) corresponding to changes in the object between the third point in time and the fourth point in time comprises data corresponding to changes in the object since the checkpoint.

9. The computer-implemented method of claim 7 or claim 8, wherein causing the primary system (102) to create a new checkpoint comprises sending a command to the primary system (102) to cause a new checkpoint to be created.

10. The computer-implemented method of any one of claims 7 to 9, wherein the primary system (102) is configured to create and assign tracking identifiers to changes to data at the primary system (102), and wherein causing the primary system (102) to create a new checkpoint comprises causing the primary system (102) to create a new tracking identifier for use as the checkpoint.

11. The computer-implemented method of claim 10, comprising:
receiving the new tracking identifier from the primary system (102); and
storing metadata associating the new tracking identifier with the third data structure (422);
determining that the third backup is to be created;
sending the new tracking identifier to the primary system (102); and
receiving data corresponding to changes in the object at the primary system (102) since the new tracking identifier was created, the third backup being created based on the data corresponding to changes in the object at the primary system (102) since the new tracking identifier was created.

12. The computer-implemented method of any one of claims 7 to 11, wherein the data of the first backup that is provided to the primary system (102) is set in a locked state at the primary system (102) in which changes to the data are prevented, and wherein the method comprises, after causing the primary system (102) to create the checkpoint, causing the primary system (102) to set the data of the first backup that is provided to the primary system (102) in an unlocked state in which changes to the data are allowed.

13. A computer program product, the computer program product being embodied in a non-transitory computer readable storage medium and comprising computer instructions for performing the computer-implemented method of any one of the preceding claims.

14. A secondary storage system comprising a processor configured to perform the computer-implemented method of any one of claims 1 to 12.

## Patentansprüche

1. Computerimplementiertes Verfahren, umfassend:
Erstellen, durch ein sekundäres Speichersystem (112), einer ersten Sicherung eines Objekts, die an einem primären System (102) gespeichert ist, wobei die erste Sicherung einen Zustand des Objekts zu einem ersten Zeitpunkt darstellt und eine erste Datenstruktur (402) und Daten umfasst, die mit dem Objekt verknüpft sind;
Erstellen, durch das sekundäre Speichersystem (112), einer zweiten Sicherung des Objekts, wobei die zweite Sicherung einen Zustand des Objekts zu einem zweiten Zeitpunkt darstellt und eine zweite Datenstruktur (404) umfasst, die auf der ersten Datenstruktur (402) und Daten (403) basiert, die Änderungen in dem Objekt zwischen dem ersten Zeitpunkt und dem zweiten Zeitpunkt entsprechen, und danach;
Empfangen (502), an dem sekundären Speichersystem (112), einer Anforderung, das Objekt in seinen Zustand zu dem ersten Zeitpunkt basierend auf der ersten Sicherung wiederherzustellen;
Bereitstellen (506), durch das sekundäre Speichersystem (112), der Daten der ersten Sicherung an das primäre System (102), um das Objekt in seinen Zustand zu dem ersten Zeitpunkt wiederherzustellen;
Erzeugen (504), durch das sekundäre Speichersystem (112), als Reaktion auf die Anforderung und ohne Empfangen von Daten, die mit dem Objekt verknüpft sind, von dem primären System (102), einer dritten Datenstruktur (422), die eine Kopie der ersten Datenstruktur ist und die den Zustand des Objekts zu einem dritten Zeitpunkt darstellt; und
Erzeugen (508), durch das sekundäre Speichersystem (112), einer dritten Sicherung des Objekts, wobei die dritte Sicherung einen Zustand des Objekts zu einem vierten Zeitpunkt darstellt und eine vierte Datenstruktur (442), die auf der dritten Datenstruktur (422) basiert, und Daten (443) umfasst, die Änderungen in dem Objekt zwischen dem dritten Zeitpunkt und dem vierten Zeitpunkt entsprechen.

2. Computerimplementiertes Verfahren nach Anspruch 1, wobei die erste Datenstruktur (402), zweite Datenstruktur (404), dritte Datenstruktur (422) und vierte Datenstruktur (442) jeweils eine erste Baumdatenstruktur, eine zweite Baumdatenstruktur, eine dritte Baumdatenstruktur und eine vierte Baumdatenstruktur umfassen.

3. Computerimplementiertes Verfahren nach Anspruch 2, wobei:
die erste Baumdatenstruktur (402) umfasst:
einen ersten Wurzelknoten;
einen oder mehrere erste Zwischenknoten; und
einen oder mehrere erste Blattknoten, wobei jeder der Knoten der ersten Baumdatenstruktur (402) eine erste Ansichtskennung aufweist;
die zweite Baumdatenstruktur (404) umfasst:
einen zweiten Wurzelknoten;
einen oder mehrere zweite Zwischenknoten; und
einen zweiten Blattknoten, wobei der zweite Wurzelknoten einen oder mehrere Zeiger, die in dem ersten Wurzelknoten eingeschlossen sind, und mindestens einen Zeiger auf einen zweiten Zwischenknoten aufweist, und wobei der eine oder die mehreren zweiten Zwischenknoten einen Zeiger auf den zweiten Blattknoten einschließen, wobei der zweite Blattknoten Daten entspricht, die sich in dem Objekt im Vergleich zu der ersten Baumdatenstruktur (404) geändert haben, und wobei jeder der zweiten Knoten eine zweite Ansichtskennung aufweist; und
wobei das Erzeugen (504) der dritten Datenstruktur (422) basierend auf der ersten Datenstruktur (402) umfasst:
Erstellen eines dritten Wurzelknotens, der ein Klon des ersten Wurzelknotens ist, wobei der dritte Wurzelknoten dieselben Zeiger wie der erste Wurzelknoten und eine dritte Ansichtskennung aufweist; und
Ersetzen, als eine aktuelle Ansichtskennung, der zweiten Ansichtskennung durch die dritte Ansichtskennung, wobei die dritte Sicherung mindestens teilweise basierend auf der dritten Ansichtskennung erstellt wird.

4. Computerimplementiertes Verfahren nach Anspruch 3, wobei das Erstellen (508) der dritten Sicherung des Objekts umfasst:
Erstellen der vierten Baumdatenstruktur (442) als eine Kopie der dritten Baumdatenstruktur (422);
Empfangen von Daten, die Änderungen an dem Objekt an dem primären System (102) im Vergleich zu der dritten Baumdatenstruktur (422) entsprechen; und
Modifizieren der vierten Baumdatenstruktur (442), um die Daten (443) anzugeben, die Änderungen an dem Objekt an dem primären System (102) im Vergleich zu der dritten Baumdatenstruktur (422) entsprechen.

5. Computerimplementiertes Verfahren nach Anspruch 4, wobei das Erstellen der vierten Baumdatenstruktur (442) umfasst:
Erstellen eines vierten Wurzelknotens, der ein Klon des dritten Wurzelknotens ist, wobei der vierte Wurzelknoten dieselben Zeiger wie der dritte Wurzelknoten aufweist und eine vierte Ansichtskennung aufweist; und
Speichern der vierten Ansichtskennung als eine aktuelle Ansichtskennung,
wobei das Modifizieren der vierten Baumdatenstruktur (442) umfasst:
Erstellen eines neuen Zwischenknotens und eines neuen Blattknotens, wobei der neue Zwischenknoten einen Zeiger auf den neuen Blattknoten einschließt und wobei der neue Blattknoten Daten entspricht, die sich in dem Objekt an dem primären System (102) im Vergleich zu der dritten Baumdatenstruktur (422) geändert haben; und
Modifizieren eines Zeigers des vierten Wurzelknotens, um auf den neuen Zwischenknoten zu verweisen.

6. Computerimplementiertes Verfahren nach einem der vorstehenden Ansprüche, wobei die Daten der ersten Sicherung, die dem primären System (102) bereitgestellt werden, an dem primären System (102) in einen gesperrten Zustand versetzt werden, in dem Änderungen an den Daten verhindert werden, und wobei das Verfahren umfasst, nach dem Erzeugen (504) der dritten Datenstruktur (422), das primäre System (102) zu veranlassen, die Daten der ersten Sicherung, die dem primären System (102) bereitgestellt werden, in einen entsperrten Zustand zu versetzen, in dem Änderungen an den Daten erlaubt sind.

7. Computerimplementiertes Verfahren nach einem der vorstehenden Ansprüche, wobei das primäre System (102) konfiguriert ist, um Änderungen an Daten des Objekts an dem primären System (102) relativ zu einem Prüfpunkt zu verfolgen, und wobei das Verfahren umfasst, nach dem Bereitstellen (506) der Daten der ersten Sicherung an das primäre System (102) und vor dem Erstellen (508) der dritten Sicherung des Objekts, das primäre System (102) zu veranlassen, einen neuen Prüfpunkt zu erstellen, wobei die dritte Sicherung auf dem neuen Prüfpunkt basiert.

8. Computerimplementiertes Verfahren nach Anspruch 7, wobei die Daten (443), die Änderungen des Objekts zwischen dem dritten Zeitpunkt und dem vierten Zeitpunkt entsprechen, Daten umfassen, die Änderungen des Objekts seit dem Prüfpunkt entsprechen.

9. Computerimplementiertes Verfahren nach Anspruch 7 oder 8, wobei das Veranlassen des primären Systems (102), einen neuen Prüfpunkt zu erstellen, das Senden eines Befehls an das primäre System (102) umfasst, um zu veranlassen, dass ein neuer Prüfpunkt erstellt wird.

10. Computerimplementiertes Verfahren nach einem der Ansprüche 7 bis 9, wobei das primäre System (102) konfiguriert ist, um Verfolgungskennungen zu Änderungen an Daten an dem primären System (102) zu erstellen und zuzuweisen, und wobei das Veranlassen des primären Systems (102), einen neuen Prüfpunkt zu erstellen, umfasst, das primäre System (102) zu veranlassen, eine neue Verfolgungskennung zur Verwendung als den Prüfpunkt zu erstellen.

11. Computerimplementiertes Verfahren nach Anspruch 10, umfassend:
Empfangen der neuen Verfolgungskennung von dem primären System (102); und
Speichern von Metadaten, die die neue Verfolgungskennung mit der dritten Datenstruktur (422) verknüpfen;
Bestimmen, dass die dritte Sicherung zu erstellen ist;
Senden der neuen Verfolgungskennung an das primäre System (102); und
Empfangen von Daten, die Änderungen an dem Objekt an dem primären System (102) entsprechen seitdem die neue Verfolgungskennung erstellt wurde, wobei die dritte Sicherung basierend auf den Daten erstellt wird, die Änderungen an dem Objekt an dem primären System (102) entsprechen, seitdem die neue Verfolgungskennung erstellt wurde.

12. Computerimplementiertes Verfahren nach einem der Ansprüche 7 bis 11, wobei die Daten der ersten Sicherung, die dem primären System (102) bereitgestellt werden, an dem primären System (102) in einen gesperrten Zustand versetzt werden, in dem Änderungen an den Daten verhindert werden, und wobei das Verfahren umfasst, nach dem Veranlassen des primären Systems (102), den Prüfpunkt zu erstellen, das primäre System (102) zu veranlassen, die Daten der ersten Sicherung, die dem primären System (102) bereitgestellt wird, in einen entsperrten Zustand zu versetzen, in dem Änderungen an den Daten erlaubt sind.

13. Computerprogrammprodukt, wobei das Computerprogrammprodukt in einem nicht flüchtigen computerlesbaren Speichermedium integriert ist und umfassend Computeranweisungen zum Durchführen des computerimplementierten Verfahrens nach einem der vorstehenden Ansprüche.

14. Sekundären Speichersystem, umfassend einen Prozessor, der konfiguriert ist, um das computerimplementierte Verfahren nach einem der Ansprüche 1 bis 12 durchzuführen.

## Revendications

1. Procédé mis en œuvre par ordinateur comprenant :
la création, par un système de stockage secondaire (112), d'une première sauvegarde d'un objet stocké au niveau d'un système primaire (102), dans lequel la première sauvegarde représente un état de l'objet à un premier moment, et comprend une première structure de données (402) et des données associées à l'objet ;
la création, par le système de stockage secondaire (112), d'une deuxième sauvegarde de l'objet, dans lequel la deuxième sauvegarde représente un état de l'objet à un deuxième moment et comprend une deuxième structure de données (404) basée sur la première structure de données (402) et des données (403) correspondant à des changements dans l'objet entre le premier moment et le deuxième moment, et par la suite ;
la réception (502), au niveau du système de stockage secondaire (112), d'une demande de restauration de l'objet à son état au premier moment sur la base de la première sauvegarde ;
la fourniture (506), par le système de stockage secondaire (112), des données de la première sauvegarde au système primaire (102) pour restaurer l'objet à son état au premier moment ;
la génération (504), par le système de stockage secondaire (112), en réponse à la demande et sans recevoir de données associées à l'objet à partir du système primaire (102), d'une troisième structure de données (422) qui est une copie de la première structure de données et qui représente l'état de l'objet à un troisième moment ; et
la création (508), par le système de stockage secondaire (112), d'une troisième sauvegarde de l'objet, dans lequel la troisième sauvegarde représente un état de l'objet à un quatrième moment et comprend une quatrième structure de données (442) basée sur la troisième structure de données (422) et des données (443) correspondant à des changements dans l'objet entre le troisième moment et le quatrième moment.

2. Procédé mis en œuvre par ordinateur selon la revendication 1, dans lequel la première structure de données (402), la deuxième structure de données (404), la troisième structure de données (422), et la quatrième structure de données (442) comprennent respectivement une première structure de données arborescente, une deuxième structure de données arborescente, une troisième structure de données arborescente et une quatrième structure de données arborescente.

3. Procédé mis en œuvre par ordinateur selon la revendication 2, dans lequel :
la première structure de données arborescente (402) comprend :
un premier nœud racine ;
un ou plusieurs premiers nœuds intermédiaires ; et
un ou plusieurs premiers nœuds feuilles, dans lequel chacun des nœuds de la première structure de données arborescente (402) a un premier identificateur de vue ;
la deuxième structure de données arborescente (404) comprend :
un deuxième nœud racine ;
un ou plusieurs seconds nœuds intermédiaires ; et
un second nœud feuille, dans lequel le deuxième nœud racine a un ou plusieurs pointeurs qui sont inclus dans le premier nœud racine et au moins un pointeur vers un second nœud intermédiaire, et dans lequel le ou les seconds nœuds intermédiaires comportent un pointeur vers le second nœud feuille, dans lequel le second nœud feuille correspond à des données qui ont changé dans l'objet par comparaison avec la première structure de données arborescente (404), et dans lequel chacun des seconds nœuds a un deuxième identificateur de vue ; et
dans lequel la génération (504) de la troisième structure de données (422) sur la base de la première structure de données (402) comprend :
la création d'un troisième nœud racine qui est un clone du premier nœud racine, dans lequel le troisième nœud racine a les mêmes pointeurs que le premier nœud racine et un troisième identificateur de vue ; et
le remplacement, en tant qu'identificateur de vue actuel, du deuxième identificateur de vue par le troisième identificateur de vue, dans lequel la troisième sauvegarde est créée sur la base, au moins en partie, du troisième identificateur de vue.

4. Procédé mis en œuvre par ordinateur selon la revendication 3, dans lequel la création (508) de la troisième sauvegarde de l'objet comprend :
la création de la quatrième structure de données arborescente (442) en tant que copie de la troisième structure de données arborescente (422) ;
la réception de données correspondant à des changements dans l'objet au niveau du système primaire (102) par comparaison avec la troisième structure de données arborescente (422) ; et
la modification de la quatrième structure de données arborescente (442) pour indiquer les données (443) correspondant à des changements dans l'objet au niveau du système primaire (102) par comparaison avec la troisième structure de données arborescente (422).

5. Procédé mis en œuvre par ordinateur selon la revendication 4, dans lequel la création de la quatrième structure de données arborescente (442) comprend :
la création d'un quatrième nœud racine qui est un clone du troisième nœud racine, le quatrième nœud racine ayant les mêmes pointeurs que le troisième nœud racine et ayant un quatrième identificateur de vue ; et
le stockage du quatrième identificateur de vue en tant qu'identificateur de vue actuel,
dans lequel la modification de la quatrième structure de données arborescente (442) comprend :
la création d'un nouveau nœud intermédiaire et d'un nouveau nœud feuille, dans lequel le nouveau nœud intermédiaire comporte un pointeur vers le nouveau nœud feuille et dans lequel le nouveau nœud feuille correspond à des données qui ont changé dans l'objet au niveau du système primaire (102) par comparaison avec la troisième structure de données arborescente (422) ; et
la modification d'un pointeur du quatrième nœud racine pour faire référence au nouveau nœud intermédiaire.

6. Procédé mis en œuvre par ordinateur selon l'une quelconque des revendications précédentes, dans lequel les données de la première sauvegarde qui est fournie au système primaire (102) sont mises dans un état verrouillé au niveau du système primaire (102) dans lequel des changements apportés aux données sont empêchés, et dans lequel le procédé comprend, après la génération (504) de la troisième structure de données (422), le fait d'amener le système primaire (102) à mettre les données de la première sauvegarde qui est fournie au système primaire (102) dans un état déverrouillé dans lequel des changements apportés aux données sont autorisés.

7. Procédé mis en œuvre par ordinateur selon l'une quelconque des revendications précédentes, dans lequel le système primaire (102) est configuré pour suivre des changements apportés à des données de l'objet au niveau du système primaire (102) par rapport à un point de contrôle, et dans lequel le procédé comprend, après la fourniture (506) des données de la première sauvegarde au système primaire (102) et avant la création (508) de la troisième sauvegarde de l'objet, le fait d'amener le système primaire (102) à créer un nouveau point de contrôle, la troisième sauvegarde étant basée sur le nouveau point de contrôle.

8. Procédé mis en œuvre par ordinateur selon la revendication 7, dans lequel les données (443) correspondant à des changements dans l'objet entre le troisième moment et le quatrième moment comprennent des données correspondant à des changements dans l'objet depuis le point de contrôle.

9. Procédé mis en œuvre par ordinateur selon la revendication 7 ou la revendication 8, dans lequel le fait d'amener le système primaire (102) à créer un nouveau point de contrôle comprend l'envoi d'une commande au système primaire (102) pour amener un nouveau point de contrôle à être créé.

10. Procédé mis en œuvre par ordinateur selon l'une quelconque des revendications 7 à 9, dans lequel le système primaire (102) est configuré pour créer et attribuer des identificateurs de suivi à des changements apportés à des données au niveau du système primaire (102), et dans lequel le fait d'amener le système primaire (102) à créer un nouveau point de contrôle comprend le fait d'amener le système primaire (102) à créer un nouvel identificateur de suivi destiné à être utilisé comme point de contrôle.

11. Procédé mis en œuvre par ordinateur selon la revendication 10, comprenant
la réception du nouvel identificateur de suivi à partir du système primaire (102) ; et
le stockage de métadonnées associant le nouvel identificateur de suivi à la troisième structure de données (422) ;
le fait de déterminer que la troisième sauvegarde doit être créée ;
l'envoi du nouvel identificateur de suivi au système primaire (102) ; et
la réception de données correspondant à des changements dans l'objet au niveau du système primaire (102) depuis la création du nouvel identificateur de suivi, la troisième sauvegarde étant créée sur la base des données correspondant à des changements dans l'objet au niveau du système primaire (102) depuis la création du nouvel identificateur de suivi.

12. Procédé mis en œuvre par ordinateur selon l'une quelconque des revendications 7 à 11, dans lequel les données de la première sauvegarde qui est fournie au système primaire (102) sont mises dans un état verrouillé au niveau du système primaire (102) dans lequel des changements apportés aux données sont empêchés, et dans lequel le procédé comprend, après avoir amené le système primaire (102) à créer le point de contrôle, le fait d'amener le système primaire (102) à mettre les données de la première sauvegarde qui est fournie au système primaire (102) dans un état déverrouillé dans lequel des changements apportés aux données sont autorisés.

13. Produit-programme informatique, le produit-programme informatique étant incorporé dans un support de stockage non transitoire lisible par ordinateur et comprenant des instructions informatiques pour effectuer le procédé mis en œuvre par ordinateur selon l'une quelconque des revendications précédentes.

14. Système de stockage secondaire comprenant un processeur configuré pour effectuer le procédé mis en œuvre par ordinateur selon l'une quelconque des revendications 1 à 12.
